# EUROPEAN PATENT APPLICATION

(11) **EP 4 607 560 A1**
(43) Date of publication of application: **27.08.2025**
(21) Application number: 23879592.6
(22) Date of filing: 02.10.2023
(51) Int. Cl.: H01H 13/14, A63F 13/24, G05G 1/01, G05G 1/02, H01H 13/705, H01H 21/00

(54) **INPUT DEVICE AND OPERATION BUTTON**

(30) Priority: 21.10.2022 JP 2022169466
(71) Applicant: Sony Interactive Entertainment Inc., Tokyo 108-0075 (JP)
(72) Inventor: MORIMOTO, So, Tokyo 108-0075 (JP); TADANO, Katsuhisa, Tokyo 108-0075 (JP)
(74) Representative: Fish & Richardson P.C.
(86) International application number: PCT/JP2023/035956
(87) International publication number: WO 2024/084945

(57) **Abstract**

Provided is a novel input device capable of improving operational comfortability for users not satisfied with operational comfortability of conventional input devices. A controller (2000) includes a main body (2100), a first operation button (2110) attached to the main body, and a second operation button (2120E) attached to the main body at a position different from a position at which the first operation button is attached. The first operation button includes an upper surface portion that constitutes an operation portion operated by a user. The second operation button includes an upper surface portion (2123E) constituting an operation portion operated by the user, and includes an extended portion (2132E) that is provided at a part of the upper surface portion of the second operation button and that covers a part of the upper surface portion of the first operation button.

## Description

### [Technical Field]

The present disclosure relates to an input device and an operation button.

### [Background Art]

PTL 1 noted below discloses an input device available to operate a game device. The input device for handling applications, such as game applications, is employed to input control signals from a user to applications.

### [Citation List]

### [Patent Literature]

[PTL 1]
PCT Patent Publication No. WO2014/061362

### [Summary]

### [Technical Problem]

Some users are not satisfied with operational comfortability of conventional input devices.

An object of the present disclosure is to provide a novel input device capable of improving operational comfortability for users not satisfied with operational comfortability of conventional input devices.

### [Solution to Problem]

An input device according to the present disclosure includes a main body, a first operation button attached to the main body, and a second operation button attached to the main body at a position different from a position at which the first operation button is attached. The first operation button includes a first upper surface portion that constitutes an operation portion operated by a user. The second operation button includes a second upper surface portion constituting an operation portion operated by the user, and includes an extended portion that is provided at a part of the second upper surface portion and that covers a part of the first upper surface portion. This configuration enables users not satisfied with operational comfortability of conventional input devices to operate the input device in a comfortable manner.

An operation button according to the present disclosure is an operation button that is attached to a main body and that includes an upper surface portion pushed by a hand, and includes an extended portion that is provided at a part of the upper surface portion and covers a part of an upper surface portion that is attached to the main body and provided on a different operation button to constitute a portion on which the hand is placed. This configuration enables users not satisfied with operational comfortability of conventional input devices to operate the input device in a comfortable manner.

### [Brief Description of Drawings]

[FIG. 1]

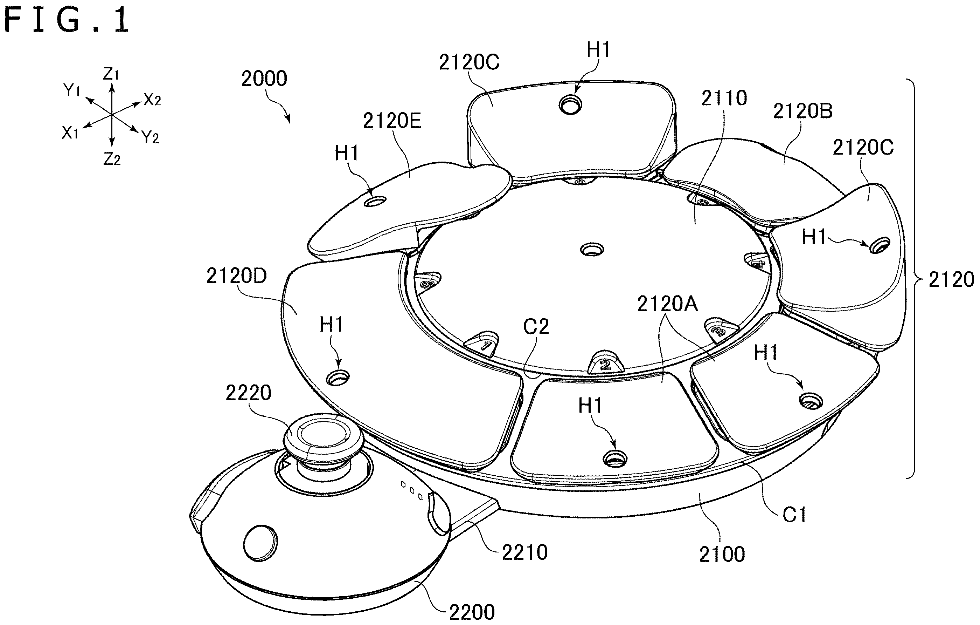

   FIG. 1 is a perspective view of a controller according to an embodiment of the present disclosure.
[FIG. 2]

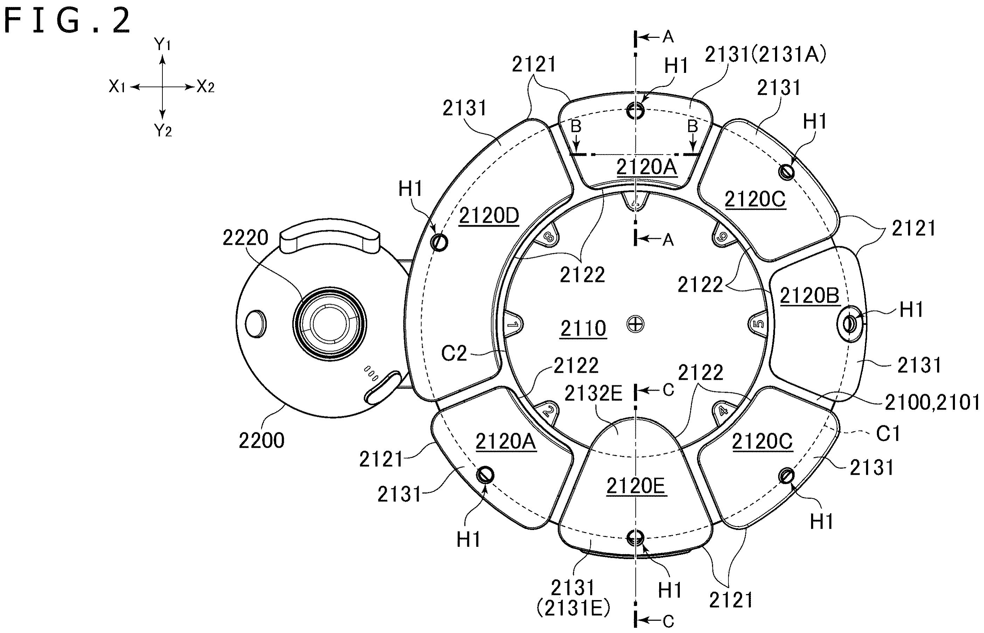

   FIG. 2 is a plan diagram of the controller.
[FIG. 3]

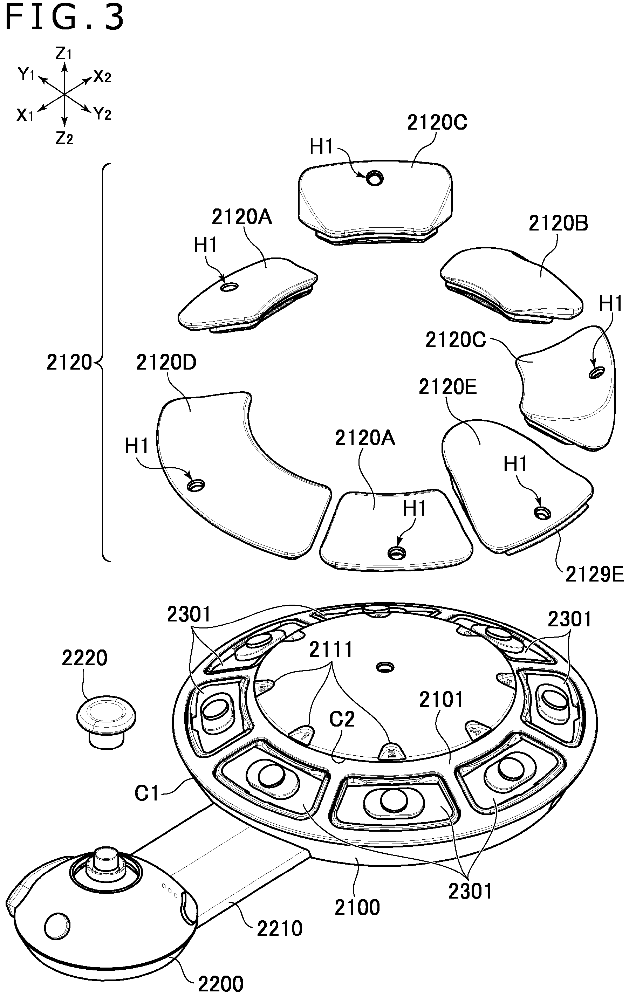

   FIG. 3 is an exploded perspective view illustrating a state of the controller from which a plurality of second operation buttons and an operation stick are disassembled.
[FIG. 4A]

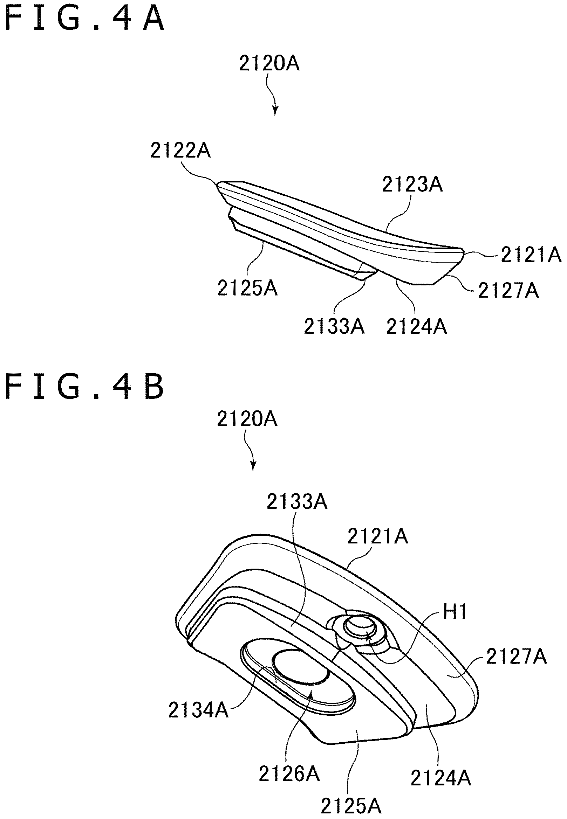

   FIG. 4A is a side view of an A type second operation button.
[FIG. 4B]
   FIG. 4B is a perspective view illustrating a lower side of the A type second operation button.
[FIG. 5A]

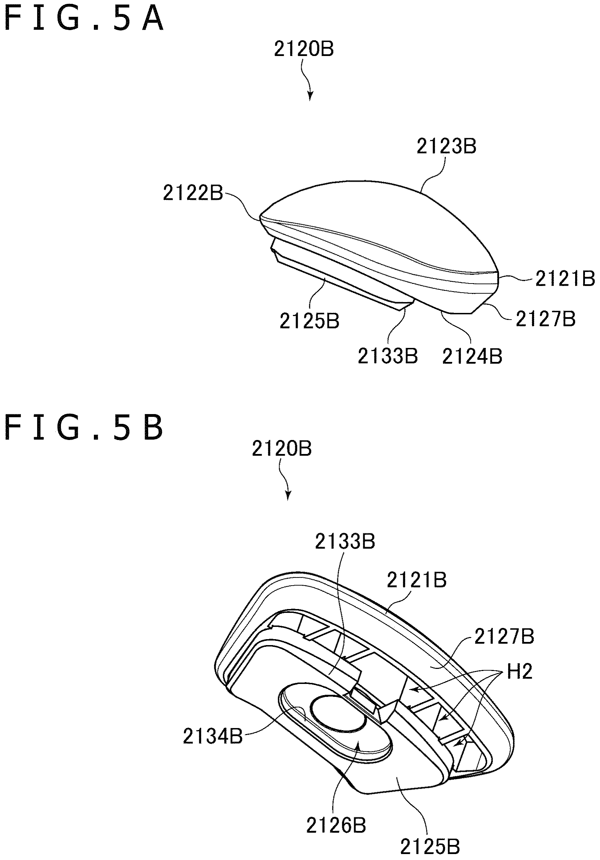

   FIG. 5A is a side view of a B type second operation button.
[FIG. 5B]
   FIG. 5B is a perspective view illustrating a lower side of the B type second operation button.
[FIG. 6A]

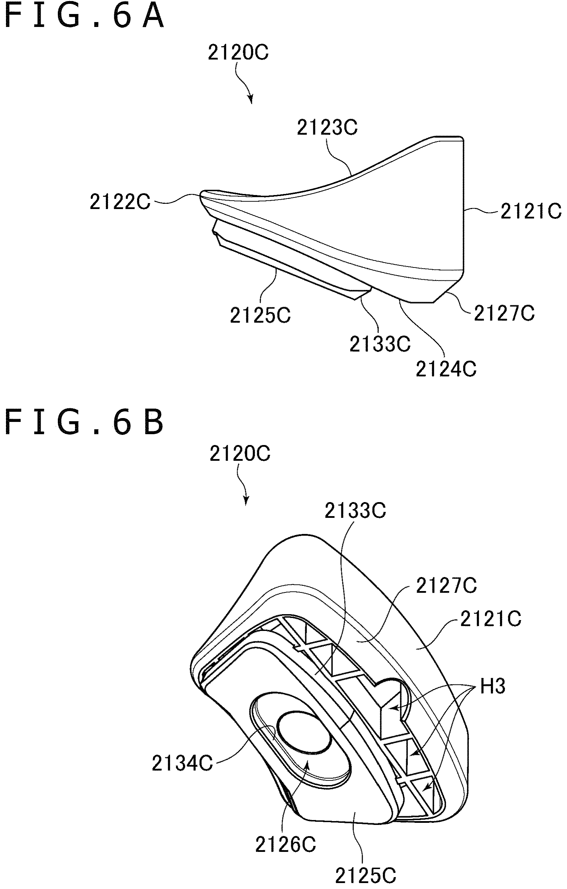

   FIG. 6A is a side view of a C type second operation button.
[FIG. 6B]
   FIG. 6B is a perspective view illustrating a lower side of the C type second operation button.
[FIG. 7]

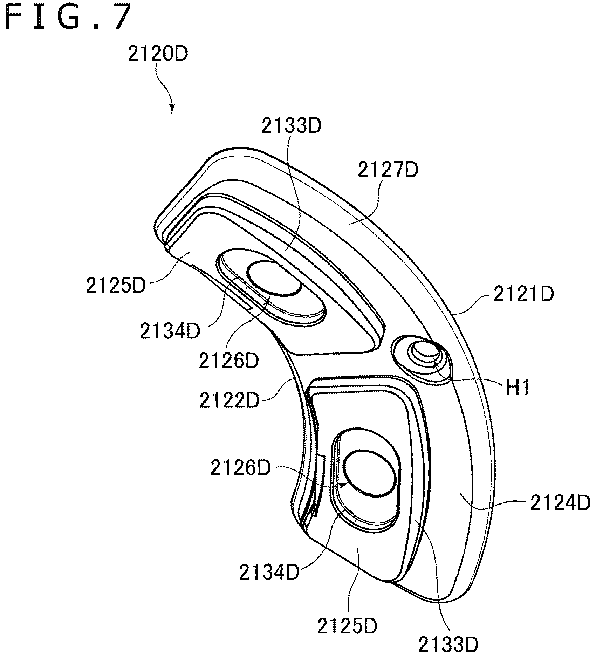

   FIG. 7 is a perspective view illustrating a lower side of a D type second operation button.
[FIG. 8A]

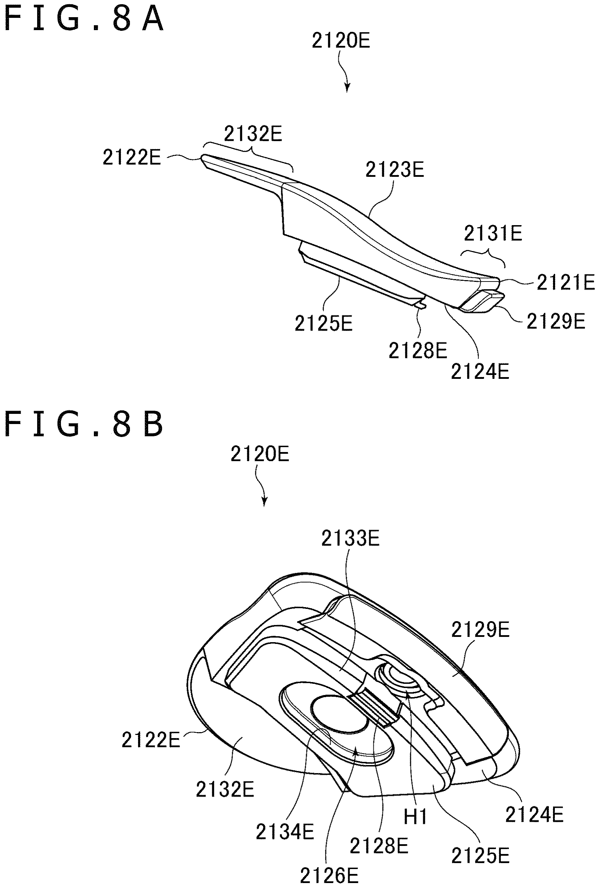

   FIG. 8A is a side view of an E type second operation button.
[FIG. 8B]
   FIG. 8B is a perspective view illustrating a lower side of the E type second operation button.
[FIG. 8C]

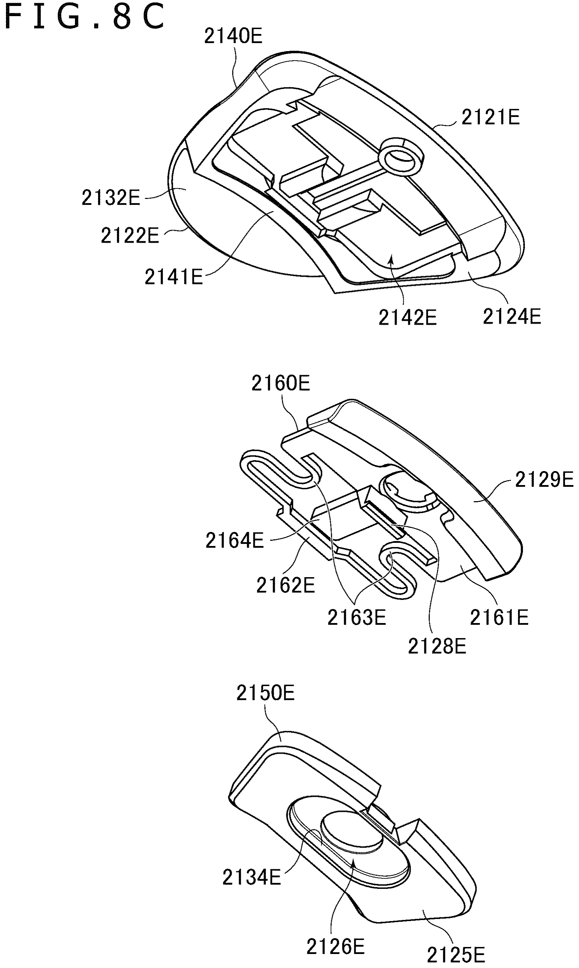

   FIG. 8C is an exploded perspective view of the E type second operation button.
[FIG. 9A]

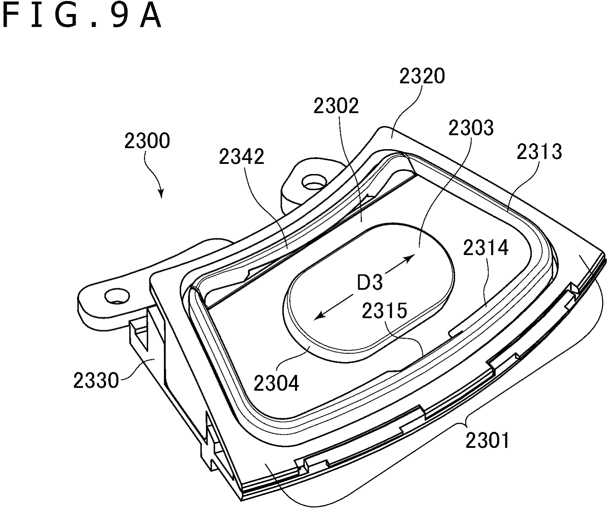

   FIG. 9A is a perspective view of a switch unit.
[FIG. 9B]

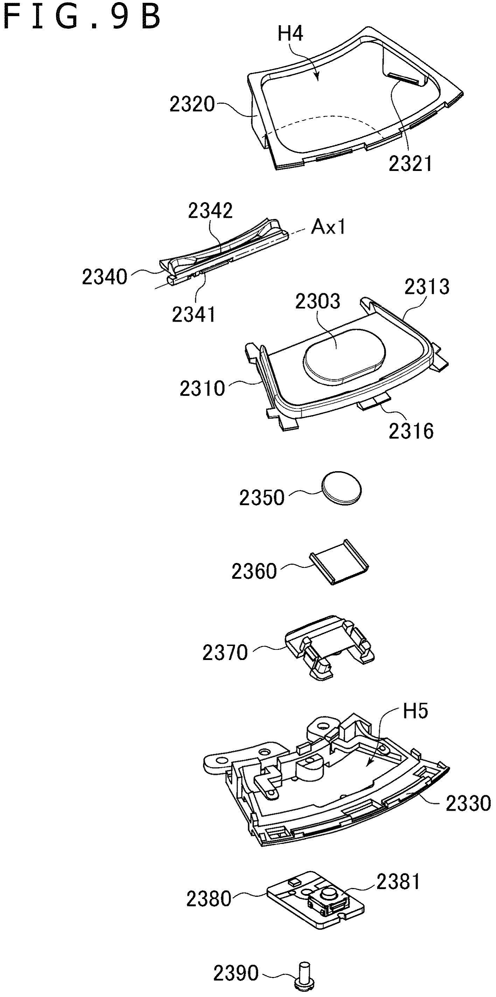

   FIG. 9B is an exploded perspective view illustrating constituent elements of the switch unit.
[FIG. 10]

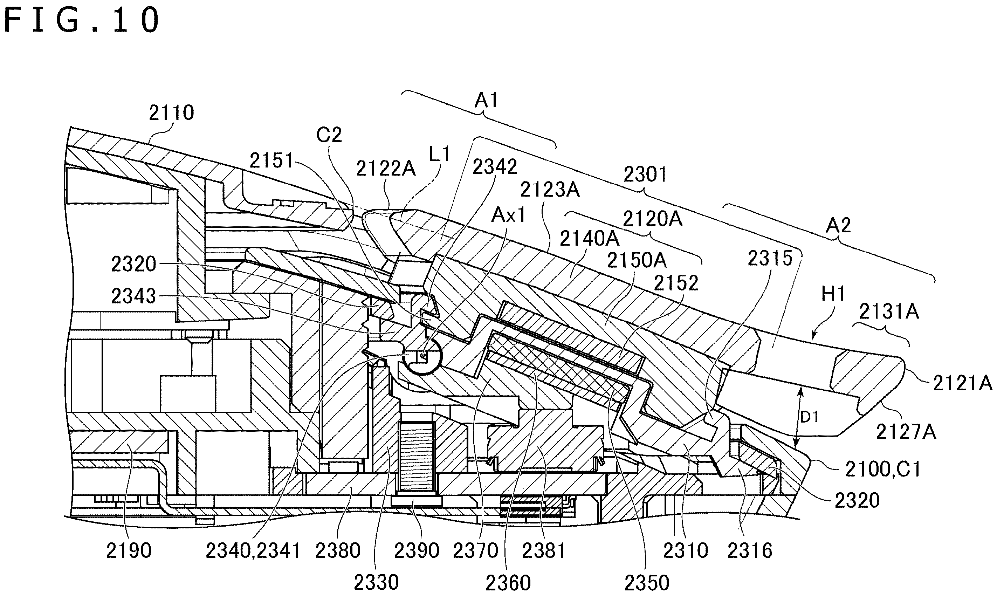

   FIG. 10 is a cross-sectional view taken along a line A-A in FIG. 2.
[FIG. 11]

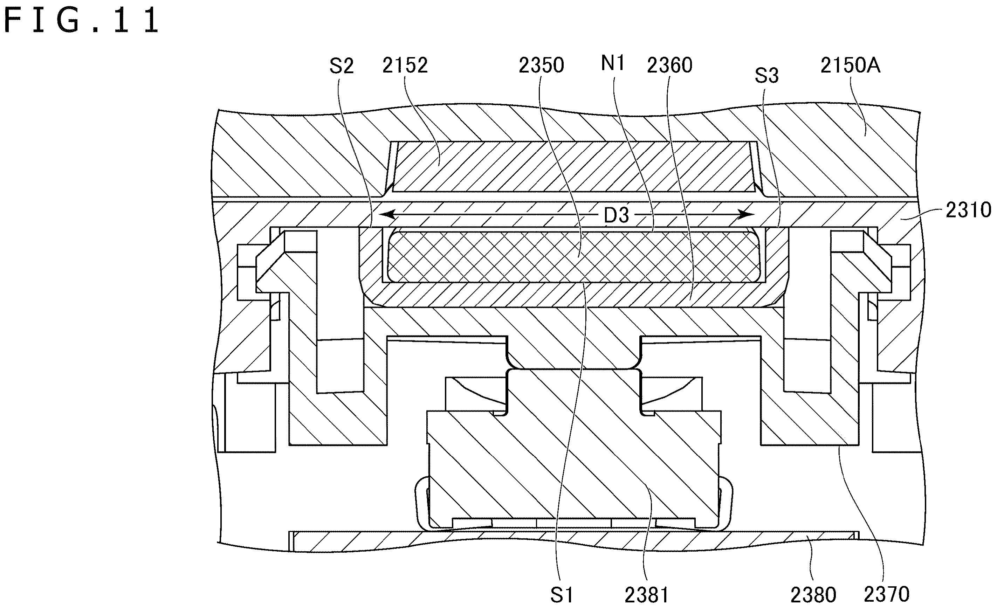

   FIG. 11 is a cross-sectional view taken along a line B-B in FIG. 2.
[FIG. 12]

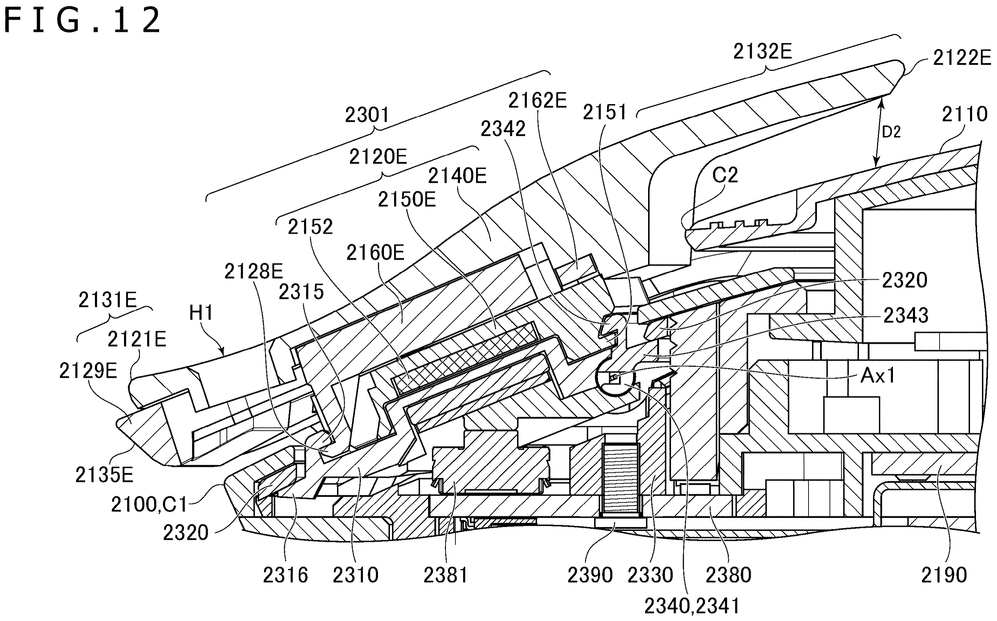

   FIG. 12 is a cross-sectional view taken along a line C-C in FIG. 2.
[FIG. 13A]

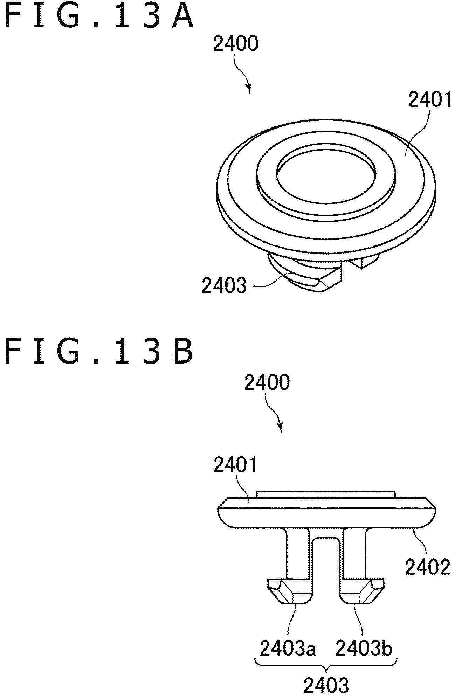

   FIG. 13A is a perspective view of an identification member.
[FIG. 13B]
   FIG. 13B is a side view of the identification member.
[FIG. 14]

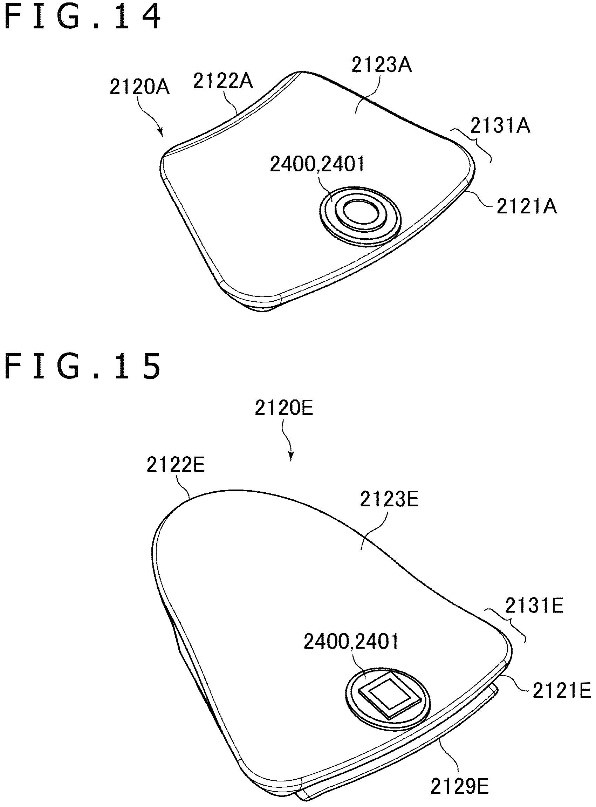

   FIG. 14 is a perspective view illustrating the A type second operation button to which the identification member is attached.
[FIG. 15]
   FIG. 15 is a perspective view illustrating the E type second operation button to which the identification member is attached.
[FIG. 16]

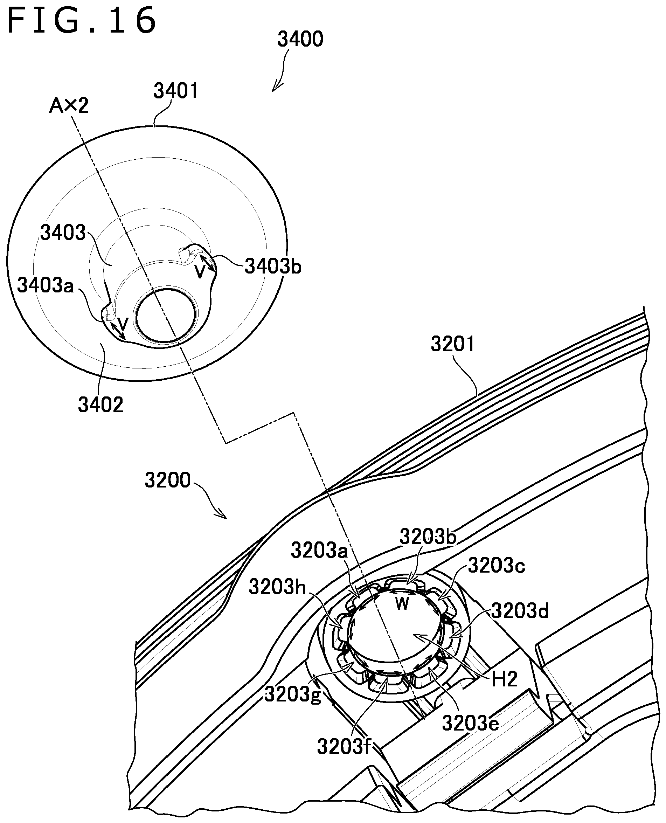

   FIG. 16 is an exploded perspective view illustrating a lower side of the second operation button and a lower side of a mark member.

### [Description of Embodiment]

An example of a controller 2000, which constitutes an input device, will hereinafter be described. For example, the controller 2000 is available as an input device for games, and configured to input operations to an information processing device which has a function of executing game applications (game programs), such as a server and a console. The controller 2000 may be employed as an input device configured to input operations to an information processing device having a moving image reproduction function, a communication function using the Internet, and other functions. The controller 2000, which is communicable with the information processing device by wired or wireless communication, transmits, to the information processing device, signals corresponding to operations input to the controller 2000 from a user.

FIG. 1 is a perspective view of the controller 2000, while FIG. 2 is a plan view of the controller 2000. Similarly to the controller 2000 described above, the controller 2000 illustrated in FIGS. 1 and 2 can be employed to input control signals to a console 202 or a server 300. Each of constituent elements of the controller 2000 described below may also include resin such as plastic, metal, a composite material of these, or the like.

It is assumed in the following description that an X1 direction and an X2 direction of an X-axis illustrated in FIG. 1 and other figures (a direction in which a main body 2100 and a stick unit 2200 described below are arranged) correspond to a right direction and a left direction, respectively. It is also assumed that a Y1 direction and a Y2 direction of a Y-axis perpendicular to the X-axis correspond to a front direction and a rear direction, respectively. It is further assumed that a Z1 direction and a Z2 direction of a Z-axis which is illustrated in FIG. 3 and other figures and which is perpendicular to the X-axis and the Y-axis (a direction in which an operation stick 2220 described below extends) correspond to an upward direction and a downward direction, respectively. Note that these directions and arrangement positions are specified for illustration of shapes and relative positional relations associated with elements of the controller 2000 (parts, members, and portions), and not for limitation of a posture of the controller 2000.

As illustrated in FIG. 1, the controller 2000 includes the main body 2100 (base), which is a main body of the controller 2000 and provided as a component where a plurality of operation buttons are arranged, and the stick unit 2200 (analog stick unit) connected to the main body 2100. The stick unit 2200 is disposed adjacently to the main body 2100 in a direction perpendicular to the up-down direction (i.e., the left-right direction in the example illustrated in FIG. 1). For example, the main body 2100 and the stick unit 2200 may be disposed on a predetermined horizontal plane, such as a floor, a desk, and the femoral region of the user. The stick unit 2200 includes a slide portion 2210 which extends in the left-right direction (the direction perpendicular to the up-down direction) and connects with the main body 2100. The stick unit 2200 has a dome shape expanding upward on the whole, and includes the operation stick 2220 which is disposed on a top portion located at a central portion of the dome shape.

A storing recess (not illustrated) is formed at a bottom of the main body 2100 to store the slide portion 2210. The slide portion 2210 is movable relatively to the storing recess in an extension direction of the slide portion 2210. Accordingly, the stick unit 2200 is movable relatively to the main body 2100 in the extension direction of the slide portion 2210. The stick unit 2200 includes a circuit board (not illustrated) for detecting movement of the operation stick 2220, while the main body 2100 includes a first circuit board 2190 (see FIG. 10) and a plurality of second circuit boards 2380 (see FIGS. 9B and 10) for detecting push operations given to the plurality of operation buttons attached to the main body 2100. The first circuit board 2190 and the plurality of second circuit boards 2380 are electrically connected to each other by unillustrated wires.

As illustrated in FIGS. 1 and 2, provided on the main body 2100 of the controller 2000 are a first operation button (central control button) 2110 constituting an operation portion operated by the user and a plurality of second operation buttons 2120 (peripheral control buttons) (A to E type second operation buttons 2120A to 2120E described below) each constituting an operation portion operated by this user. The main body 2100 has a circular shape in a planar view. The first operation button 2110 and the plurality of second operation buttons 2120 are attached onto the main body 2100. The first operation button 2110 also has a circular shape in the planar view. The first operation button 2110 is provided at a central portion of the main body 2100. As illustrated in FIG. 2, a part of an outer surface of the main body 2100 (upper surface portion 2101) is exposed outside an outer circumferential edge C2 of the first operation button 2110. The first operation button 2110 has a wider upper surface portion than each of the plurality of second operation buttons 2120, and forms a dome shape which has a central portion gradually expanding upward. These size and shape of the first operation button 2110 enable the user to easily put his or her hand on the first operation button 2110. The first operation button 2110 can be provided as a button on which the user puts the hand.

As illustrated in FIG. 2, the plurality of second operation buttons 2120 are disposed along the outer circumferential edge C2 of the first operation button 2110 in the planar view. Each of the plurality of the second operation buttons 2120 in a state of being attached to the main body 2100 is arranged in a circular arc shape along the outer circumferential edge C2 of the first operation button 2110 in the planar view. Each of the second operation buttons 2120 has an outer circumferential edge 2121 and an inner circumferential edge 2122 each having a circular arc shape. In a state where each of the second operation buttons 2120 is attached to the main body 2100, the outer circumferential edge 2121 of the corresponding second operation button 2120 is disposed out of the outer circumferential edge C1 of the main body 2100 and located outside the main body 2100. In a state where each of the second operation buttons 2120 is attached to the main body 2100, the inner circumferential edge 2122 of each of the second operation buttons 2120 is disposed inside the outer circumferential edge C1 of the main body 2100. Each of the plurality of second operation buttons 2120 is formed such that the outer circumferential edge 2121 is longer than the inner circumferential edge 2122 and has a tapered shape whose width in the circumferential direction of the main body 2100 gradually decreases from the outer circumferential edge 2121 to the inner circumferential edge 2122. A side edge of each of the second operation buttons 2120 (the side edge connecting with an end of the outer circumferential edge 2121 and an end of the inner circumferential edge 2122) extends toward the center of the main body 2100 in a radial direction of the main body 2100. This shape of the plurality of second operation buttons 2120 equalizes clearances between respective pairs of the adjoining second operation buttons 2120 in the state where the plurality of second operation buttons 2120 are attached to the main body 2100.

As illustrated in FIG. 2, each of the outer circumferential edges 2121 of the plurality of second operation buttons 2120 is disposed outside the outer circumferential edge C1 of the main body 2100 to form a circular-arc-shaped outer edge along the outer circumferential edge C1. An opening H1 formed in each of upper surface portions of the plurality of second operation buttons 2120 is an opening to which a mark member 2400 described below (see FIGS. 13A and 13B) is attached. The opening H1 of each of the second operation buttons 2120 is formed at a position closer to the outer circumferential edge 2121 of the corresponding second operation button 2120 than a central portion of the corresponding second operation button 2120. The opening H1 is formed at a center position of the corresponding second operation button 2120 in a width direction (the circumferential direction of the main body 2100). A part of the opening H1 is formed in an outer circumferential portion 2131 of the corresponding second operation button 2120.

As illustrated in FIG. 2, an inner circumferential edge 2122 of each of the A to D type second operation buttons 2120A to 2120D in the plurality of second operation buttons 2120 is recessed in a circular arc shape along the outer circumferential edge C2 of the first operation button 2110. Each of the inner circumferential edges 2122 of the A to D type second operation buttons 2120A to 2120D is disposed outside the outer circumferential edge C2 of the first operation button 2110 to form a circular-arc-shaped inner edge along the outer circumferential edge C2.

As illustrated in FIG. 2, each of the plurality of second operation buttons 2120A has the outer circumferential portion 2131 including the outer circumferential edge 2121. In a state where the second operation buttons 2120 are attached to the main body 2100, each of the outer circumferential portions 2131 is disposed out of the outer circumferential edge C1 of the main body 2100 and extends outward. This shape of the second operation buttons 2120 can expand the upper surface portion constituting the operation surface of the second operation button 2120A. For example, in a case where an operation button is small and has a narrow surface like an operation button of a conventional input device, this operation button may be difficult to operate for some users. With this regard, widening of the upper surface portion of the second operation button 2120A allows easier pushing of the button, thereby improving operational comfortability of the controller 2000 including the second operation button 2120A for users not satisfied with operational comfortability of conventional input devices. Moreover, lower surface portions of the outer circumferential portions 2131 of the second operation buttons 2120 (e.g., a lower surface portion 2124A in FIG. 4A described below) are exposed. Accordingly, the user is allowed to raise the second operation buttons 2120 from the main body 2100 by fitting the hand, a part of the body, a tool, or the like from the lower surface portions of the outer circumferential portions 2131 of the second operation buttons 2120. As will be described below, the plurality of second operation buttons 2120 raised in this manner can be removed from the main body 2100.

As illustrated in FIG. 2, an inner circumferential edge 2122E of the E type second operation button 2120E is disposed out of the outer circumferential edge C2 of the first operation button 2110 and extends to the inside of the main body 2100. As illustrated in FIG. 12, the E type second operation button 2120E has an extended portion 2132E that is included in an upper surface portion 2123E (second upper surface portion) of the E type second operation button 2120E and that covers a part of the upper surface portion (first upper surface portion) of the first operation button 2110. The A to D type second operation buttons 2120A to 2120D do not overlap with the first operation button 2110 in the planar view, but the extended portion 2132E of the E type second operation button 2120E overlaps with the first operation button 2110. This configuration increases the size of the upper surface portion 2123E of the E type second operation button 2120E in a direction toward the central portion of the main body 2100. Accordingly, this configuration decreases a distance from the E type second operation button 2120E to the second operation button 2120 which is disposed on the opposite side with the first operation button 2110 interposed between the E type second operation button 2120E and the corresponding second operation button 2120. Accordingly, the user can easily operate the second operation button 2120E and the second operation button 2120 disposed on the opposite side, while placing the hand on the first operation button 2110. The arrangement position of the upper surface portion 2123E of the E type second operation button 2120E (e.g., the size of the extended portion 2132E) with respect to the upper surface portion of the first operation button 2110 can appropriately be set according to ease of use for the user.

In the example illustrated in FIG. 2, one of the plurality of second operation buttons 2120 attached to the main body 2100 corresponds to the E type second operation button 2120E. The extended portion 2132E overlapping with the first operation button 2110 in the planar view is not illustrated for each of the A to D type second operation buttons 2120A to 2120D. Accordingly, an exposed area inside the plurality of second operation buttons 2120 can sufficiently be left on the upper surface portion of the first operation button 2110.

FIG. 3 is an exploded perspective view illustrating a state of the controller 2000 from which the plurality of second operation buttons 2120 and the operation stick 2220 are disassembled. As illustrated in FIG. 3, each of the plurality of second operation buttons 2120 is removable from the main body 2100. Moreover, the operation stick 2220 is also removable from the stick unit 2200. For example, attachable to the stick unit 2200 is such an operation stick which has a hole at an end of the operation stick. A strap is put through the hole of the operation stick to allow the user to wear the strap or a wearing tool (e.g., a band) to which the strap is attached. There is a possibility that this configuration improves easiness and operational comfortability of the operation stick for users who feel that conventional operation sticks are difficult to operate.

As illustrated in FIG. 3, the main body 2100 includes a plurality of button receiving portions 2301 (pads) outside the first operation button 2110. The plurality of button receiving portions 2301 have the same shape. The plurality of second operation buttons 2120 are respectively attachable to the plurality of button receiving portions 2301. The plurality of button receiving portions 2301 surround the first operation button 2110 in the planar view. Each of the plurality of button receiving portions 2301 is disposed between the outer circumferential edge C1 of the main body 2100 and the outer circumferential edge C2 of the first operation button 2110. The upper surface portion of the main body 2100 and the plurality of button receiving portions 2301 are inclined from the central portion of the main body 2100 to the outside along the upper surface portion of the dome-shaped first operation button 2110 (see FIG. 10). The plurality of button receiving portions 2301 may be equally disposed in the circumferential direction along the outer circumferential edge C1 of the first operation button 2110 in the planar view.

As will be described below, each bottom of the A to E type second operation buttons 2120A to 2120E has a shape corresponding to the button receiving portion 2301. The user of the controller 2000 can select the desired second operation button 2120 from the plurality of A to E type second operation buttons 2120A to 2120E, and attach the selected second operation button 2120 to the portion of the main body 2100 where the button receiving portion 2301 is provided. For example, as illustrated in FIGS. 1 and 2, the user can change the arrangement of the second operation buttons 2120A to 2120E of the main body 2100. While the eight button receiving portions 2301 are provided in the example illustrated in FIG. 3, the number of the button receiving portions 2301 provided in the main body 2100 is not limited to this number. At a maximum, the user of the controller 2000 can attach, to the main body 2100, the same number of the second operation buttons 2120 as the number of the button receiving portions 2301 providable in the main body 2100.

As illustrated in FIG. 3, a plurality of identification information display portions 2111 each indicating identification information, such as a number, are provided on the outer circumferential portion of the first operation button 2110, including the outer circumferential edge C2 of the first operation button 2110. The identification information display portions 2111 are provided at positions corresponding to the button receiving portions 2301. The identification information display portions 2111 are provided at positions corresponding to the button receiving portions 2301 in the circumferential direction of the main body 2100. Accordingly, the user can recognize identification information allocated to the button receiving portions 2301, by checking the identification information indicated by the identification information display portions 2111. While different numbers "1" to "8" are given as identification information in the example illustrated in FIG. 3, items of the identification information are not limited to Arabic numerals, and may be Roman numbers or other types of characters or symbols. Moreover, the identification information may be formed in a Braille pattern or by embossing to allow the user to touch and identify information.

As will be described below, a switch is provided in each of the button receiving portions 2301. Under an application **(e.g.,** a game application) executed by an information processing device communicating with the controller 2000, such as a console and a server, the switch of the button receiving portion 2301 corresponding to a function of this application can be set, and allocation of the switch corresponding to the function can be changed. For example, the user can change allocation of a predetermined function of an application from the switch of the button receiving portion 2301 disposed at the position corresponding to identification information "1" in FIG. 3 (the same position in the circumferential direction of the main body 2100) to the switch of the button receiving portion 2301 disposed at the position that corresponds to identification information "2" and that is adjacent to the switch corresponding to the identification information "1."

The respective A to E type second operation buttons 2120A to 2120E have different shapes. For example, the user can identify, both visually and by a touch with the hand, which of the A to E type second operation buttons 2120 the user is currently touching, on the basis of a difference in shape between the respective A to E type second operation buttons 2120A to 2120E. Described below with reference to the drawings will be structures of the respective A to E type second operation buttons 2120A to 2120E and the button receiving portions 2301 receiving the respective second operation buttons 2120A to 2120E.

FIG. 4A is a side view of the A type second operation button 2120A, while FIG. 4B is a perspective view illustrating a lower side of the A type second operation button 2120A. FIG. 5A is a side view of the B type second operation button 2120B, while FIG. 5B is a perspective view illustrating a lower side of the B type second operation button 2120B. FIG. 6A is a side view of the C type second operation button 2120C, while FIG. 6B is a perspective view illustrating a lower side of the C type second operation button 2120C. FIG. 7 is a perspective view illustrating a lower side of the D type second operation button 2120D. FIG. 8A is a side view of the E type second operation button 2120E, while FIG. 8B is a perspective view illustrating a lower side of the E type second operation button 2120E. FIG. 8C is an exploded perspective view of the E type second operation button 2120E, and illustrates a lower side of the E type second operation button 2120E.

In addition, FIG. 9A is a perspective view of a switch unit 2300 that is disposed in a periphery of the first operation button 2110 of the main body 2100 and that includes the button receiving portion 2301. FIG. 9B is an exploded perspective view illustrating constituent elements of the switch unit 2300. FIG. 10 is a cross-sectional view taken along a line A-A in FIG. 2, while FIG. 11 is a cross-sectional view taken along a line B-B in FIG. 2. Each of FIGS. 10 and 11 illustrates a state of the A type second operation button 2120A attached to the button receiving portion 2301. FIG. 12 is a cross-sectional view taken along a line C-C in FIG. 2, and illustrates a state of the E type second operation button 2120E attached to the button receiving portion 2301.

The A type second operation button 2120A will first be described. As illustrated in FIG. 4A, an upper surface portion 2123A of the A type second operation button 2120A includes an outer circumferential edge 2121A and an inner circumferential edge 2122A of the second operation button 2120A, and faces upward and diagonally in a radial direction of the main body 2100 (a direction from the inner circumferential edge 2122A to the outer circumferential edge 2121A). The upper surface portion 2123A of the A type second operation button 2120A is slightly curved in the up-down direction. Moreover, the lower surface portion 2124A of the A type second operation button 2120A includes the outer circumferential edge 2121A and the inner circumferential edge 2122A similarly to the upper surface portion 2023A. The lower surface portion 2124A of the A type second operation button 2120A faces downward and diagonally in a radial direction of the main body 2100 (a direction from the outer circumferential edge 2121A to the inner circumferential edge 2122A). The outer circumferential edge 2121A of the A type second operation button 2120A has a larger thickness than that of the inner circumferential edge 2122A. Moreover, a slope 2127A is formed on the outer circumferential edge 2121A of the A type second operation button 2120A. The slope 2127A constitutes a lower surface of the outer circumferential portion 2131 of the second operation button 2120A, and is inclined downward and toward the inside.

As illustrated in FIG. 4B, a fitting protrusion 2125A is formed on the lower surface portion 2124A of the A type second operation button 2120A. The fitting protrusion 2125A has a shape corresponding to each of the plurality of button receiving portions 2301 provided on the upper surface portion 2101 of the main body 2100 (see FIG. 3). The fitting protrusion 2125A is attachable to any one of the plurality of button receiving portions 2301. The fitting protrusion 2125A of the second operation button 2120A protrudes downward from the lower surface portion 2124A. Each of the plurality of button receiving portions 2301 is recessed downward from the upper surface portion 2101 of the main body 2100 to form a fitting recess 2302 for receiving the fitting protrusion 2125A of the second operation button 2120A (see FIG. 9A). The recess-protrusion relation between the fitting protrusion 2125A and the button receiving portion 2301 may be reversely defined.

According to the present embodiment, a first fitting portion 2126A (see FIG. 4B) is formed at a central portion of the fitting protrusion 2125A of the second operation button 2120A, while a second fitting portion 2303 (see FIG. 9A) is formed at a central portion of the button receiving portion 2301 (a central portion of the fitting recess 2302). The second fitting portion 2303 of the button receiving portion 2301 fits into the first fitting portion 2126A of the second operation button 2125A in a state where the second operation button 2125A is attached to the button receiving portion 2301. Moreover, first engaging portions 2126B to 2126E into which the second fitting portions 2303 of the button receiving portions 2301 fit, respectively, are also formed at central portions of the fitting protrusions 2125B to 2125E of the B to E type second operation buttons 2120B to 2120E described below. Note that the first fitting portion 2126A is a recess which is recessed in a direction away from the button receiving portion 2301 and that the second fitting portion 2303 is a protrusion which protrudes toward the second operation button 2120A in FIGS. 4B and 9A. However, the recess-protrusion relation between the first fitting portion 2126A and the second fitting portion 2303 may be reversely defined. For example, the first fitting portion 2126A may be a protrusion which protrudes toward the button receiving portion 2301, while the second fitting portion 2303 may be a recess which is recessed in the direction away from the second operation button 2120A. Moreover, while the first fitting portion 2126A and the second fitting portion 2303 each have a rectangular shape having rounded corners in the planar view, each shape of the first fitting portion 2126A and the second fitting portion 2303 is not limited to this shape.

The B type second operation button 2120B will subsequently be described. As illustrated in FIGS. 5A and 5B, an upper surface portion 2123B and a lower surface portion 2124B of the B type second operation button 2120B each include an outer circumferential edge 2121B and an inner circumferential edge 2122B. The outer circumferential edge 2121B of the B type second operation button 2120B includes a slope 2127B. The slope 2127B constitutes a lower surface of the outer circumferential portion 2131 of the second operation button 2120B, and is inclined downward and toward the inside. A central portion of the upper surface portion 2123B of the B type second operation button 2120B expands upward unlike the upper surface portion 2123A of the A type second operation button 2120A. The expanded shape of the upper surface portion 2123B of the B type second operation button 2120B may enable the B type second operation button 2120B to be operated more easily by some users than the A type second operation button 2120A. For example, the user in a certain case operates the second operation button 2120B by sliding the hand, which has been placed on the upper surface portion of the first operation button 2110, along the upper surface portion of the dome-shaped first operation button 2110. During this process, the hand of the user interferes with the upper surface portion 2123B of the second operation button 2120B. Accordingly, a push applied to the B type second operation button 2120B may be more easily carried out than an operation applied to the A type second operation button 2120A.

As illustrated in FIG. 5B, a fitting protrusion 2125B similar to the fitting protrusion 2125A of the A type second operation button 2120A is also formed on the lower surface portion 2124B of the B type second operation button 2120B. This configuration also enables attachment of the fitting protrusion 2125B of the B type second operation button 2120B to all of the plurality of button receiving portions 2301. Moreover, a plurality of holes H2 are formed in the lower surface portion 2124B of the B type second operation button 2120B. This configuration contributes to weight reduction of the B type second operation button 2120B.

The C type second operation button 2120C will subsequently be described. As illustrated in FIGS. 6A and 6B, an upper surface portion 2123C and a lower surface portion 2124C of the C type second operation button 2120C each include an outer circumferential edge 2121C and an inner circumferential edge 2122C. The outer circumferential edge 2121C of the C type second operation button 2120C includes a slope 2127C. The slope 2127C constitutes a lower surface of the outer circumferential portion 2131 of the second operation button 2120C, and is inclined downward and toward the inside. Unlike the upper surface portion 2123A of the A type second operation button 2120A, the upper surface portion 2123C of the C type second operation button 2120C faces upward and diagonally in a radial direction of the main body 2100 (a direction from the outer circumferential edge 2121C to the inner circumferential edge 2122C). The upper surface portion 2123C of the C type second operation button 2120C is slightly curved in the up-down direction. Moreover, similarly to the lower surface portion 2124A of the A type second operation button 2120A, the lower surface portion 2124C of the C type second operation button 2120C faces downward and diagonally in the direction from the outer circumferential edge 2121C to the inner circumferential edge 2122C. As illustrated in FIG. 6A, the thickness of the C type second operation button 2120A in the up-down direction gradually increases from the inner circumferential edge 2122C toward the outer circumferential edge 2121C.

As illustrated in FIGS. 1 and 6A, the outer circumferential edge 2121C of the C type second operation button 2120C is located highest in the state where the plurality of A to E type second operation buttons 2120A to 2120E are attached to the main body 2100. This configuration may enable some users to more easily operate the C type second operation button 2120C than the other second operation buttons 2120. For example, the hand of the user interferes with the outer circumferential edge 2121C of the second operation button 2120C in a process of sliding the hand along the upper surface portion of the dome-shaped first operation button 2110 to operate the second operation button 2120C. In this case, a push applied to the C type second operation button 2120C may be more easily carried out than operations applied to the other second operation buttons 2120 (e.g., the A type second operation button 2120A).

As illustrated in FIG. 6B, a fitting protrusion 2125C similar to the fitting protrusion 2125A of the A type second operation button 2120A is also formed on the lower surface portion 2124C of the C type second operation button 2120C. This configuration also enables attachment of the fitting protrusion 2125C of the C type second operation button 2120C to all of the plurality of button receiving portions 2301. Moreover, a plurality of holes H3 are formed in the lower surface portion 2124C of the C type second operation button 2120C. This configuration contributes to weight reduction of the C type second operation button 2120C similarly to the B type second operation button 2120B.

The D type second operation button 2120D will subsequently be described. Similarly to the A type second operation button 2120A, the D type second operation button 2120D has an upper surface portion which faces upward and diagonally in a radial direction of the main body 2100 (a direction from the inner circumferential edge 2122D to the outer circumferential edge 2121D) and which is slightly curved in the up-down direction as illustrated in FIGS. 1 and 7. The outer circumferential edge 2121D of the D type second operation button 2120D includes a slope 2127D. The slope 2127D constitutes a lower surface of the outer circumferential portion 2131 of the second operation button 2120D, and is inclined downward and toward the inside. The D type second operation button 2120D is different from the A type second operation button 2120A in that the width of the D type second operation button 2120D is larger than the width of the A type second operation button 2120A in the circumferential direction of the main body 2100 to which the plurality of second operation buttons 2120 are attached. The larger width of the D type second operation button 2120D may enable the D type second operation button 2120D to be more easily pushed than the A type second operation button 2120A. Moreover, an operation for simultaneously pushing the adjoining buttons may be more facilitated. Concerning the A to D type second operation buttons 2120, the outer circumferential edges 2121A to 2121C have the same or substantially the same width in the circumferential direction, while the outer circumferential edge 2121D has the same or substantially the same width as the twice larger width than the width of the outer circumferential edge 2121A. Similarly, concerning the A to D type second operation buttons 2120, the inner circumferential edges 2122A to 2122C have the same or substantially the same width in the circumferential direction, while the inner circumferential edge 2122D has the same or substantially the same width as the twice larger width than the width of the inner circumferential edge 2122A.

As illustrated in FIG. 7, two fitting protrusions 2125D similar to the fitting protrusion 2125A of the A type second operation button 2120A are formed on the lower surface portion 2124D of the D type second operation button 2120D. The D type second operation button 2120D is different from the A type second operation button 2120A also in that the two fitting protrusions 2125D are provided. The two fitting protrusions 2125D disposed on the lower surface portion 2124D of the D type second operation button 2120D are away from each other in the circumferential direction of the main body 2100. The D type second operation button 2120D is attached to the main body 2100 by attachment of the two fitting protrusions 2125D to the two adjoining button receiving portions 2301 (see FIG. 3). The user can push one or both of switch elements 2381 respectively provided on the two adjoining button receiving portions 2301 (see FIG. 9B), by pushing the D type second operation button 2120D.

The E type second operation button 2120E will finally be described. Similarly to the A type second operation button 2120A, the E type second operation button 2120E has an upper surface portion 2123E which faces upward and diagonally in a radial direction of the main body 2100 (a direction from the inner circumferential edge 2122E to the outer circumferential edge 2121E) and which is slightly curved in the up-down direction as illustrated in FIG. 8A. As illustrated in FIG. 2, the inner circumferential edge 2122E included in the upper surface portion 2123E of the E type second operation button 2120E protrudes toward the central portion of the main body 2100 more largely than the inner circumferential edges 2122 of the other second operation buttons 2120.

As illustrated in FIGS. 8A and 8B, the extended portion 2132E including the inner circumferential edge 2122E is formed on the upper surface portion 2123E of the E type second operation button 2120E. As illustrated in FIG. 12, the extended portion 2132E of the second operation button 2120E covers a part of the upper surface portion of the first operation button 2110 in a state where the second operation button 2120E is attached to the main body 2100.

As illustrated in FIG. 8B, the fitting protrusion 2125E is also formed on the lower surface portion 2124E of the E type second operation button 2120E. As illustrated in FIGS. 10 and 12, the respective fitting protrusions 2125A and 2125E of the second operation buttons 2120A and 2120E include engaging portions 2151 (second engaging portions), which engage with the button receiving portions 2301, near the inner circumferential edges 2122A and 2122E, respectively. Similarly to the fitting protrusions 2125A and 2125E, each of the fitting protrusions 2125B to 2125D of the B to D type second operation buttons 2120B to 2120D has the engaging portion 2151 engaging with the button receiving portion 2301.

As illustrated in FIG. 12, the fitting protrusion 2125E of the E type second operation button 2120E also includes an engaging portion 2128E (first engaging portion), which engages with the button receiving portion 2301, near the outer circumferential edge 2121E. Moreover, a movable portion 2129E which projects to the outside of the second operation button 2120E and is allowed to be pushed toward the inner circumferential edge 2122E is provided on the outer circumferential edge 2121E of the E type second operation button 2120E. The engaging portion 2128E moves toward the inner circumferential edge 2122E according to a push applied to the movable portion 2129E. The engaging portion 2128E and the movable portion 2129E are provided on only the E type second operation button 2120E. An engaging portion engaging with the button receiving portion 2301 is not formed on each of the A to D type second operation buttons 2120A to 2120D near the outer circumferential edges 2121 of the fitting protrusions 2125A to 2125D. Moreover, a movable portion allowed to be pushed toward the inner circumferential edge 2122 is not provided on each of the A to D type second operation buttons 2120A to 2120D.

As illustrated in FIG. 8C, the E type second operation button 2120E has an upper member 2140E including the outer circumferential edge 2121E, the inner circumferential edge 2122E, the upper surface portion 2123E (see FIG. 8A), and the lower surface portion 2124E of the E type second operation button 2120E and a lower member 2150E including the fitting protrusion 2125E. The E type second operation button 2120E is formed by combining the upper member 2140E and the lower member 2150E in the up-down direction. Similarly to the E type second operation button 2120E, each of the A to D type second operation buttons 2120A to 2120D may be formed by combining an upper member (e.g., an upper member 2140A illustrated in FIG. 10) and a lower member (e.g., a lower member 2150A illustrated in FIG. 10).

As illustrated in FIG. 8C, a side surface 2141E of the upper member 2140E of the E type second operation button 2120E near the inner circumferential edge 2122E is recessed in a circular arc shape along the outer circumferential edge C2 of the first operation button 2110 similarly to the inner circumferential edges 2122 of the A to D type second operation buttons 2120A to 2120D. This configuration can suppress interference between the lower surface portion 2124E of the E type second operation button 2120E and the first operation button 2110 at the time of attachment of the E type second operation button 2120E to the button receiving portion 2301 of the main body 2100, or a downward push of the E type second operation button 2120E from the main body 2100.

As illustrated in FIG. 8C, the E type second operation button 2120E has an engaging member 2160E including the engaging portion 2128E and the movable portion 2129E. The engaging member 2160E is disposed between the upper member 2140E and the lower member 2150E. A storage recess 2142E recessed upward from the lower surface portion 2124E is formed in the upper member 2140E. The engaging member 2160E is stored inside the storage recess 2142E. According to the present embodiment, each of the A to D second operation buttons 2120A to 2120D does not have a member corresponding to the engaging member 2160E.

As illustrated in FIG. 8C, the engaging member 2160E has a base 2161E including the engaging portion 2128E and the movable portion 2129E, a fixed portion 2162E disposed away from the base 2161E in a direction toward the inner circumferential edge 2122E, a spring portion 2163E extended in a curved manner from the base 2161E and connected with the fixed portion 2162E, and a stopper portion 2164E extended from the base 2161E toward the inner circumferential edge 2122E. The engaging portion 2128E is a claw portion which extends downward from the base 2161E and forms a lower end protruding toward the movable portion 2129E.

The fixed portion 2162E of the engaging member 2160E is fixed to the storage recess 2142E of the upper member 2140E. In this manner, a relative position of the fixed portion 2162E to the upper member 2140E and the lower member 2150E is fixed. When the user pushes the movable portion 2129E toward the inner circumferential edge 2122E, the base 2161E and the engaging portion 2128E formed on the base 2161E move toward the fixed portion 2162E according to an elastic bend of the spring portion 2163E. In this case, the stopper portion 2164E collides with the fixed portion 2162E to regulate an excessive push of the movable portion 2129E. When the user releases the movable portion 2129E in this state, the base 2161E and the engaging portion 2128E move in a direction away from the fixed portion 2162E according to restoration of the shape of the spring portion 2163E to the initial shape, and return to the initial position. As described above, the movable portion 2129E and the engaging portion 2128E are made movable relatively to the fixed portion 2162E. Accordingly, the movable portion 2129E and the engaging portion 2128E are allowed to move relatively to the upper member 2140E and the lower member 2150E.

Described will be a structure of the main body 2100 associated with the button receiving portions 2301 to which the A to E type second operation buttons 2120A to 2120E are attachable. As illustrated in FIG. 3, a plurality of the button receiving portions 2301 are provided on the main body 2100. The respective button receiving portions 2301 are provided on the switch units 2300 illustrated in FIGS. 9A and 9B. The plurality of button receiving portions 2301 and the plurality of switch units 2300 on the main body 2100 surround the first operation button 2110.

As illustrated in FIGS. 9A and 9B, each of the switch units 2300 includes a base member 2310, a cover member 2320 which covers a part of the base member 2310, a first support member 2330 which supports the base member 2310 from below, a shaft member 2340, a magnet 2350 having a flat plate shape, a magnetic body 2360 which covers the lower side of the magnet 2350, a second support member 2370 which supports the magnet 2350 and the magnetic body 2360 from below, and a second circuit board 2380 on an upper surface portion of which a switch element 2381 is mounted. The cover member 2320 has a frame shape. An opening H4 is formed at a central portion of the cover member 2320. The button receiving portion 2301 is exposed through the opening H4 of the cover member 2320. An engaging portion 2321 engaging with the first support member 2330 is formed at a lower end of the cover member 2320. The cover member 2320 fixed to the first support member 2330 prevents separation of the shaft member 2340, the magnet 2350, the magnetic body 2360, and the second support member 2370, which are disposed between the cover member 2320 and the first support member 2330, from the first support member 2330.

As illustrated in FIGS. 9B and 10, the base member 2310 and the shaft member 2340 are disposed on the switch unit 2300 between the cover member 2320 and the first support member 2330. A recess is formed in the base member 2310 on the side (lower side) opposite to the second fitting portion 2303 as a protrusion of the upper surface portion. The magnet 2350 and the magnetic body 2360 are stored inside this recess. Moreover, a wall portion 2313 surrounding the second fitting portion 2303 is formed on an upper surface portion of the base member 2310. A protrusion 2316 protruding toward the outer circumferential edge C1 of the main body 2100 is formed on the base member 2310 outside the wall portion 2313. The protrusion 2316 of the base member 2310 is sandwiched between the cover member 2320 and the first support member 2330 in the up-down direction. This configuration can prevent separation of the base member 2310 on the outer circumferential edge C1 side of the main body 2100.

As illustrated in FIGS. 9B and 10, the shaft member 2340 of the switch unit 2300 is provided on the base member 2310. The shaft member 2340 is attached to the base member 2310, and is rotatable relatively to the base member 2310 around a center aligned with an axial line Ax1. The shaft member 2340 includes a shaft portion 2341 extending along the axial line Ax1 and an engaging portion 2342 located above the axial line Ax1. The engaging portion 2342 is a claw portion which extends upward from the shaft portion 2341 and forms an upper end protruding toward the outer circumferential edge C1 of the main body 2100. The engaging portion 2342 extends along the axial line Ax1. As illustrated in FIG. 9A, the engaging portion 2342 and also the wall portion 2313 of the base member 2310 surround the fitting recess 2302 and the second fitting portion 2303 provided on the fitting recess 2302. The engaging portion 2342 may be a recess with which the engaging portion 2151 of the second operation button 2120 engages.

The second circuit board 2380 of the switch unit 2300 illustrated in FIG. 9B is fixed to the first support member 2330 by a fixture 2390 such as a screw. An opening H5 is formed at a central portion of the first support member 2330. The switch element 2381 is exposed through the opening H5. Moreover, the second support member 2370, the magnetic body 2360, the magnet 2350, the base member 2310, and the cover member 2320 are disposed above the switch element 2381 in this order from below. When the user pushes the second operation button 2120 downward, the second support member 2370 moves downward along with movement of the base member 2310 and the magnet 2350. The switch element 2381 detects the second operation button 2120 being pushed by the user, by detecting approach of the second support member 2370 or a push applied to the switch by the second support member 2370.

As illustrated in FIG. 10, the A type second operation button 2120A is formed by combining, in the up-down direction, the upper member 2140A which includes the outer circumferential edge 2121A, the upper surface portion 2123A, and the like and the lower member 2150A which includes the fitting protrusion 2125A.

As illustrated in FIG. 10, the upper surface portion 2123A of the A type second operation button 2120A is disposed above an extension line L1 extending along the upper surface portion of the first operation button 2110. Similarly, each of the upper surface portions 2123B to 2123E of the B to E type second operation button 2120B to 2120E are also disposed above an extension line extending along the upper surface portion of the first operation button 2110. This configuration produces steps between the upper surface portion of the first operation button 2110 and the upper surface portions 2123A to 2123E of the second operation buttons 2120A to 2120E. For example, when the user slides the hand from the upper surface portion of the first operation button 2110 and moves the hand to any one of the plurality of second operation buttons 2120, the hand of the user collides with the corresponding step. In this case, the user can easily recognize a boundary between the first operation button 2110 and the second operation button 2120. In addition, the user can feel that the hand of the user is touching the second operation button 2120, on the basis of recognition, through the sense of touch by the hand, that the hand has moved beyond the step. Specifically, switching of the operation target button is easily recognizable during the button operation using a portion larger than a fingertip. In this manner, operational comfortability of the controller 2000 including the second operation buttons 2120 improves for users not satisfied with operational comfortability of conventional input devices.

The controller 2000 includes a first magnetic structure and a second magnetic structure. The first magnetic structure includes at least two magnetic poles away from each other in the circumferential direction of the main body 2100 (first direction). The second magnetic structure includes a magnetic body or a magnet facing the at least two magnetic poles of the first magnetic structure. According to the present embodiment, the "magnetic pole" refers to an end face through which magnetic flux enters or leaves, such as an end of a magnet and an end of a magnetic body. The first magnetic structure is provided on one of the base member 2310 constituting the button receiving portion 2301 and the second operation button 2120, while the second magnetic structure is provided on the other of the base member 2310 and the second operation button 2120.

Magnetic force generated by the first and second magnetic structures provided on the base member 2310 and the second operation button 2120 attracts the second operation button 2120 to the button receiving portion 2301. In this case, the at least two magnetic poles of the first magnetic structure are away from each other in the circumferential direction of the main body 2100. Accordingly, a posture of the second operation button 2120 can be corrected by the magnetic force. The user is only required to arrange the second operation button 2120 at an approximate position at the time of attachment of the second operation button 2120 to the button receiving portion 2301. Accordingly, attachment work of the second operation button 2120 is easily carried out. For example, the user can slide the second operation button 2120 along the upper surface portion of the dome-shaped first operation button 2110 to move and attach the second operation button 2120 to the button receiving portion 2301.

According to the present embodiment, as illustrated in FIG. 10, the base member 2310 has the one magnet 2350, while the second operation button 2120 has the one magnetic body 2152. As illustrated in FIG. 11, the magnet 2350 has a magnetic pole (e.g., a north pole) N1 on the upper side and a magnetic pole (a magnetic pole opposite to the magnetic pole N1, e.g., a south pole) S1 on the lower side. The magnetic pole N1 and the magnetic pole S1 of the magnet 2350 are away from each other in the up-down direction (a direction in which the second operation button 2120 is pushed down, a third direction crossing the first direction and a second direction described below).

For example, the magnetic body 2152 is a metal plate, and is fixed to the lower member 2150A and exposed downward from the first fitting portion 2126A (FIG. 4B) forming a recess or the like. Each of the B to E second operation buttons 2120B to 2120E also has the magnetic body 2152 fixed to the lower member. The magnetic body 2152 faces the magnet 2350 provided on the lower side of the button receiving portion 2301 and is attracted to the button receiving portion 2301 by magnetic force of the magnet 2350 in a state where the second operation button 2120A is attached to the button receiving portion 2301. Alternatively, the base member 2310 may have a magnetic body, and the second operation button 2120 may have a magnet. In addition, the second operation button 2120 may have a magnet instead of the magnetic body 2152.

The first magnetic structure includes the U-shaped magnetic body 2360. As illustrated in FIGS. 9B and 11, the magnet 2350 is disposed on a recess of the U-shaped magnetic body 2360. The magnetic body 2360 functions as what is generally called a magnetized yoke which increases attraction force of the magnet 2350 for attracting the magnetic body 2152. At the upper end of the magnetic body 2360, the magnet 2350 generates magnetic force of magnetic poles S2 and S3 (e.g., south poles) opposite to the upper magnetic pole (e.g., a north pole) N1 of the magnet 2350 as illustrated in FIG. 11. Note that the north-south pole relation between the magnet 2350 and the magnetic body 2360 may be reversely defined.

As illustrated in FIG. 11, the three magnetic poles including the magnetic pole N1 of the magnet 2350, i.e., the magnetic poles S2, N1, and S3 are arranged in this order on the button receiving portion 2301 in the circumferential direction of the main body 2100 (a direction indicating by an arrow D3 in FIGS. 9A and 11). As illustrated in FIGS. 3 and 9A, the length of the button receiving portion 2301 in the circumferential direction of the main body 2100 is larger than the length of the button receiving portion 2301 in the radial direction of the main body 2100. The magnetic poles S2, N1, and S3 constituting the first magnetic structure are arranged in the longitudinal direction of the button receiving portion 2301.

This arrangement of the magnetic poles S2, N1, and S3 constituting the first magnetic structure on the button receiving portion 2301 can correct a posture of the second operation button 2120 relative to the button receiving portion 2301 with use of magnetic force. In this manner, work for attaching the second operation button 2120 to the button receiving portion 2301 can easily be carried out. Moreover, the number of the magnets 2350 disposed on the button receiving portion 2301 can be reduced compared to a case where a plurality of magnets are arranged in the circumferential direction of the button receiving portion 2301.

The first magnetic structure may include a plurality of magnets. In this case, it is preferable that the plurality of magnets on the button receiving portion 2301 be away from each other in the circumferential direction of the main body 2100 (first direction). It is further preferable that the magnetic poles of the two adjoining magnets of the plurality of magnets be opposite magnetic poles. For example, in a case where the upper magnetic pole of one magnet is a north pole, it is preferable that the upper magnetic pole of the magnet adjacently located be a south pole. In a case where the first magnetic structure has a plurality of magnets, the first magnetic structure may have a plurality of U-shaped magnetic bodies. In this case, the plurality of magnets may be respectively disposed in recesses of the plurality of U-shaped magnetic bodies.

As illustrated in FIG. 10, the button receiving portion 2301 of the main body 2100 includes the base member 2310 and the shaft member 2340 attached to the base member 2310. The shaft member 2340 extends along the axial line Ax1, and includes the shaft portion 2341 containing the axial line Ax1 and the engaging portion 2342 extending upward from the shaft portion 2341. The engaging portion 2342 of the shaft member 2340 is disposed between the first operation button 2110 and the second operation button 2120A and comes into contact with the second operation button 2120A in a state where the second operation button 2120A is attached to the button receiving portion 2301.

The fitting protrusion 2125A of the second operation button 2120A includes the engaging portion 2151 at a position near the inner circumferential edge 2122. The engaging portion 2151 of the second operation button 2120A comes into contact with the engaging portion 2342 of the shaft member 2340 and engages with the engaging portion 2342 in a state where the second operation button 2120A is attached to the button receiving portion 2301. The engaging portion 2151 constituting a claw portion engages with the engaging portion 2342 similarly constituting a claw portion. Only one of the engaging portion 2151 and the engaging portion 2342 may be a claw portion, while the other of the engaging portion 2151 and the engaging portion 2342 may be a recess engaging with this claw. Engagement between the engaging portion 2151 and the engaging portion 2342 prevents displacement of the second operation button 2120A in a direction away from the button receiving portion 2301. Moreover, an engaging portion engaging with the engaging portion 2342 of the shaft member 2340 is also provided on each of the fitting protrusions 2125B to 2125D of the B to D type second operation buttons 2120B to 2120D.

As illustrated in FIG. 10, with respect to at least two magnetic poles contained in the first magnetic structure **(e.g.,** three magnetic poles produced by the magnet 2350 and the U-shaped magnetic body 2360), the engaging portion 2151 of the second operation button 2120A is located in a direction toward the central portion of the main body 2100 (the second direction, the direction crossing the first direction in which the at least two magnetic poles are away from each other). The second operation button 2120A can be pushed down in the third direction crossing the first direction and the second direction. The engaging portion 2151 of the second operation button 2120A is away from the magnetic poles of the first magnetic structure in the second direction (the direction crossing the first direction in which the at least two magnetic poles are away from each other and the third direction corresponding to a direction in which the second operation button 2120A is pushed down). This configuration can prevent separation of the second operation button from the main body 2100 when the second operation button 2120A is pushed down on the side opposite to the side where the engaging portion 2151 is provided.

The second operation button 2120A crosses over the outer circumferential edge of the button receiving portion 2301 in a direction opposite to the direction in which the engaging portion 2151 is located with respect to the at least two magnetic poles included in the first magnetic structure (the direction toward the outer circumferential edge C1 of the main body 2100). In the planar view of FIG. 3, the second operation button 2120A covers the whole area of the button receiving portion 2301. As illustrated in FIG. 10, the second operation button 2120A includes a first portion A1 and a second portion A2. The first portion A1 corresponds to the side where the engaging portion 2151 is provided with respect to the at least two magnetic poles of the first magnetic structure. The second portion A2 is a portion corresponding to the side opposite to the first portion A1 with respect to the at least two magnetic poles of the first magnetic structure. The width of the second portion A2 in the radial direction of the main body 2100 (second direction) is larger than the width of the first portion A1. In the planar view, the second portion A2 is wider than the first portion A1. Accordingly, the user can push the second portion A2 more easily than the first portion A1.

As illustrated in FIG. 10, a clearance D1 is formed between the outer circumferential portion C1 of the main body 2100 and the second operation button 2120A. Accordingly, in a case where the user pushes down the second operation button 2120A at a position near the outer circumferential edge 2121A (e.g., the second portion A2), a portion of the second operation button 2120A near the inner circumferential edge 2122A (e.g., the first portion A1) is urged upward. Note herein that the engaging portion 2151 engages with the engaging portion 2342 of the button receiving portion 2301 at the portion of the second operation button 2120A near the inner circumferential edge 2122A. This configuration can effectively prevent separation of the second operation button 2120A from the button receiving portion 2301. Moreover, the width of the second portion A2 of each of the B to D type second operation buttons 2120B to 2120D, which is the portion corresponding to the side opposite to the first portion corresponding to the side where the engaging portion 2151 is provided, is also larger in the radial direction of the main body 2100 than the width of the first portion A1. This configuration can also effectively prevent separation of the B to D type second operation button 2120B to 2120D from the button receiving portions 2301.

The engaging portion 2342 of the shaft member 2340 is urged toward a position indicated in FIG. 10 (hereinafter referred to as a lock position) by an elastic member (not illustrated) such as a spring. When the second operation button 2120A is attached to the button receiving portion 2301, the engaging portion 2342 is disposed at the lock position and engages with the engaging portion 2151 of the second operation button 2120A. When the user raises the outer circumferential edge 2121A of the second operation button 2120A in this state, the engaging portion 2342 of the shaft member 2340 is pushed by the second operation button 2120A. In this case, the whole of the shaft member 2340 rotates around a center aligned with the axial line Ax1. As a result, the engaging portion 2342 of the shaft member 2340 moves from the lock position corresponding to the initial position illustrated in FIG. 10 to an unlock position (a position closer to the first operation button 2110 than the lock position). In this manner, the second operation button 2120A can be removed from the button receiving portion 2301. The user can easily remove the second operation button 2120A from the button receiving portion 2301 by raising upward the outer circumferential edge 2121A of the second operation button 2120A. Each of the B to D type second operation buttons 2120B to 2120D can also easily be removed from the button receiving portion 2301 by raising the corresponding outer circumferential edge 2121.

As illustrated in FIG. 10, the slope 2127A which extends downward from the outer edge of the outer circumferential edge 2121A of the A type second operation button 2120A and toward the central portion of the main body 2100 is formed on the outer circumferential edge 2121A. When the user raises upward the outer circumferential edge 2121A of the second operation button 2120A and pushes the slope 2127A, the second operation button 2120A moves upward and toward the central portion of the main body 2100. With the movement of the second operation button 2120A toward the central portion of the main body 2100, the engaging portion 2342 of the shaft member 2340 is pushed by the second operation button 2120A and moves to the unlock position. In this state, the second operation button 2120A can be removed from the button receiving portion 2301. In other words, the slope 2127A formed on the outer circumferential edge 2121A of the second operation button 2120A facilitates removal of the second operation button 2120A. Moreover, the slopes 2127B to 2127D which extend downward and toward the central portion of the main body 2100 are also formed on the outer circumferential edges 2121B to 2121D of the B to D type second operation buttons 2120B to 2120D. This configuration also facilitates removal of the B to D type second operation buttons 2120B to 2120D.

As illustrated in FIG. 10, the button receiving portion 2301 including the base member 2310 and the shaft member 2340 is urged upward by a switch of the switch element 2381. An outer edge of the button receiving portion 2301 is in contact with the cover member 2320 having a frame shape and including the opening H4 (see FIG. 9B). The protrusion 2316 of the base member 2310 (see FIG. 9B) is disposed at the outer edge of the button receiving portion 2301 on one side (an end of the main body 2100 near the edge C1), while the protrusion 2343 which protrudes in a direction toward the central portion of the main body 2100 from the shaft portion 2341 of the shaft member 2340 (a direction crossing the up-down direction and the axial line Ax1) is disposed at the outer edge on the other side (an end of the main body 2100 near the central portion). The protrusion 2316 of the base member 2310 and the protrusion 2343 of the shaft member 2340 are in contact with the cover member 2320 fixed to the main body 2100. According to a push applied to one side or the other side of the outer edge of the button receiving portion 2301, the button receiving portion 2301 is movable downward with a fulcrum located on the side opposite to the side to which the push has been applied. Accordingly, the switch of the switch element 2381 is operable by both of pushes applied to the one side and the other side of the outer edge of the button receiving portion 2301.

As illustrated in FIG. 12, the E type second operation button 2120E is formed by combining the upper member 2140E and the lower member 2150E in the up-down direction. The engaging member 2160E is disposed between the upper member 2140E and the lower member 2150E. As illustrated in FIG. 12, the magnetic body 2152, such as a metal plate, is also formed on the lower member 2150E of the E type second operation button 2120E. This configuration allows the magnetic body 2152 to be attracted to the button receiving portion 2301 by magnetic force of the magnet 2350 provided on the button receiving portion 2301, thereby facilitating attachment of the E type second operation button 2120E to the button receiving portion 2301. Moreover, a plurality of magnetic poles are disposed on the button receiving portion 2301 in the circumferential direction of the main body 2100. Accordingly, a posture of the E type second operation button 2120E can be corrected at the time of attachment of the E type second operation button 2120E to the button receiving portion 2301.

As illustrated in FIG. 12, the extended portion 2132E including the inner circumferential edge 2122E of the E type second operation button 2120E covers an area including the outer circumferential edge C2 of the upper surface portion of the first operation button 2110. A clearance D2 is provided in the up-down direction between the extended portion 2132E and the upper surface portion of the first operation button 2110. The clearance D2 is larger than a movable range of the second operation button 2120E (i.e., a movable range of the button receiving portion 2301). This configuration prevents interference between the extended portion 2132E and the first operation button 2110 when the E type second operation button 2120E is pushed down.

As illustrated in FIG. 12, the E type second operation button 2120E includes the outer circumferential portion 2131E which is disposed out of the outer circumferential edge C1 of the main body 2100 and extends outward. As illustrated in FIG. 2, each of the A to D type second operation buttons 2120A to 2120D also includes the outer circumferential portion 2131 disposed out of the outer circumferential edge C1 and located outside (e.g., an outer circumferential portion 2131A of the A type second operation button 2120A illustrated in FIG. 10).

As illustrated in FIG. 2, the width of the extended portion 2132E of the E type second operation button 2120E is smaller than the width of the outer circumferential portion 2131E. This configuration facilitates layout of a plurality of operation buttons, including the E type second operation button 2120E, of the main body 2100. As illustrated in FIG. 12, the fitting protrusion 2125E of the E type second operation button 2120E includes the engaging portion 2151 (second engaging portion) at a position near the inner circumferential edge 2122E (near the extended portion 2132E) similarly to the A type second operation button 2120A. The engaging portion 2151 engages with the engaging portion 2342 of the shaft member 2340 in a state where the second operation button 2120E is attached to the button receiving portion 2301. This configuration can effectively prevent separation of the E type second operation button 2120E from the button receiving portion 2301 even in a case where the user pushes downward a portion of the second operation button 2120E near the outer circumferential portion 2131E and urges upward the extended portion 2132E on the side opposite to the pushed portion, for example.

Moreover, the E type second operation button 2120E includes the engaging portion 2128E (first engaging portion) at a position near the outer circumferential edge 2121E. The engaging portion 2128E is provided on the second operation button 2120E on the side opposite to the extended portion 2132E. The base member 2310 constituting the button receiving portion 2301 includes an engaging portion 2315. The engaging portion 2315 of the button receiving portion 2301 is formed below the wall portion 2313 (see FIG. 9B). The engaging portion 2128E of the second operation button 2120E engages with the engaging portion 2315 of the base member 2310 in a state where the second operation button 2120E is attached to the button receiving portion 2301. This configuration can prevent separation of the E type second operation button 2120E from the button receiving portion 2301. Particularly, the engaging portion 2128E of the E type second operation button 2120E engages with the button receiving portion 2301 at a position near the outer circumferential portion 2131E. This configuration can effectively prevent separation of the E type second operation button 2120E from the button receiving portion 2301 even in a case where the user pushes downward the extended portion 2132E largely protruding toward the first operation button 2110 and urges upward the outer circumferential portion 2131E on the side opposite to the extended portion 2132E.

As illustrated in FIG. 12, the movable portion 2129E is provided on the outer circumferential portion 2131E of the second operation button 2120E. When the user pushes the movable portion 2129E toward the inner circumferential edge 2122, the engaging portion 2128E of the second operation button 2120E moves from a lock position corresponding to the initial position illustrated in FIG. 12 to an unlock position (a position closer to the inner circumferential edge 2122 than the lock position). The user can release the engagement between the engaging portion 2128E of the second operation button 2120E and the engaging portion 2315 of the base member 2310 by pushing the movable portion 2129E. When the user raises upward the outer circumferential edge 2121E of the second operation button 2120E in this state, the engaging portion 2342 of the shaft member 2340 is pushed by the second operation button 2120E and moves to the unlock position. In this manner, the second operation button 2120E is removable from the button receiving portion 2301.

As illustrated in FIG. 12, a slope 2135E is formed on an outer surface of the movable portion 2129E provided on the outer circumferential edge 2121E of the E type second operation button 2120E. The slope 2135E extends downward and toward the central portion of the main body 2100 from the outer edge of this outer surface. When the user pushes the slope 2135E, the second operation button 2120E moves upward and in a diagonal direction toward the central portion of the main body 2100. With the movement of the second operation button 2120E toward the central portion of the main body 2100, the second operation button 2120E can push the engaging portion 2342 of the shaft member 2340. In this manner, the second operation button 2120E is removable from the button receiving portion 2301. In other words, the slope 2135E formed on the movable portion 2129E of the second operation button 2120E can release the engagement between the two engaging portions 2128E and 2342 and the second operation button 2120E according to a series of actions for pushing the movable portion 2129E, thereby facilitating removal of the second operation button 2120E.

As illustrated in FIG. 10, an engaging portion engaging with the engaging portion 2315 of the base member 2310 is not provided on the A type second operation button 2120A. A guided slope 2133A which is guided by the wall portion 2313 of the base member 2310 (see FIGS. 9A and 9B) is formed on the outer circumferential surface of the fitting protrusion 2125 of the second operation button 2120A. The guided slope 2133A slopes downward and toward the inner circumferential edge 2122A from the outer edge of the fitting protrusion 2125A (the outer edge near the outer circumferential edge 2121A).

As illustrated in FIG. 9A, a guide slope 2314 which extends downward and toward the second fitting portion 2303 is formed inside the wall portion 2313 that is disposed on the upper surface portion of the base member 2310 and that surrounds the second fitting portion 2303. The guided slope 2133A formed on the fitting protrusion 2125A of the second operation button 2120A comes into contact with the guide slope 2314 and slides along the guide slope 2314. In this manner, the fitting protrusion 2125A can be guided to the inside of the wall portion 2313 according to the sliding. This configuration can facilitate attachment of the A type second operation button 2120A to the button receiving portion 2301. Moreover, guided slopes 2133B to 2133E are also formed on the fitting protrusions 2125B to 2125E of the B to E type second operation buttons 2120B to 2120E, respectively. This configuration can also facilitate each of the B to E type second operation buttons 2120B to 2120E to the button receiving portion 2301.

As illustrated in FIG. 4B, the first fitting portion 2126A is formed on a central portion of the fitting protrusion 2125A. A wall surface 2134A is formed on the first fitting portion 2126A. The wall surface 2134A of the first fitting portion 2126A is a surface perpendicular to a bottom surface of the fitting protrusion 2125A. The wall surface 2134A of the first fitting portion 2126A may be a surface more perpendicular to the bottom surface of the fitting protrusion 2125A than the guided slope 2133A. As illustrated in FIG. 9A, the second fitting portion 2303 (second fitting portion) protruding upward is formed on the central portion of the button receiving portion 2301. A wall surface 2304 is also formed on the second fitting portion 2303. The wall surface 2304 of the second fitting portion 2303 is a surface perpendicular to a bottom surface of the button receiving portion 2301 (a bottom surface of the fitting recess 2302). The wall surface 2304 of the second fitting portion 2303 may be a surface more perpendicular to the bottom surface of the button receiving portion 2301 than the guide slope 2314.

When the second operation button 2120A is attached to the button receiving portion 2301, the wall surface 2134A of the first fitting portion 2126A collides with the wall surface 2304 of the second fitting portion 2303. This configuration can suppress movement of the second operation button 2120A along the bottom surface of the button receiving portion 2301 (the bottom surface of the fitting recess 2302). Moreover, wall surfaces 2134B to 2134E are also formed on recesses 2126B to 2126E of the fitting protrusions 2125B to 2125E of the B to E type second operation buttons 2120B to 2120E, respectively. This configuration can also suppress movement of each of the B to E type second operation buttons 2120B to 2120E along the bottom surface of the button receiving portion 2301.

FIG. 13A is a perspective view of the mark member 2400 attached to the second operation button 2120. FIG. 13B is a side view of the mark member 2400. The mark member 2400 may be manufactured using such a material as resin and rubber. As illustrated in FIG. 1, the opening H1 is formed in the upper surface portion of each of the plurality of second operation buttons 2120 (e.g., the upper surface portion 2123A of the A type second operation button 2120A). The mark member 2400 is detachably attached to the opening H1 of each of the second operation buttons 2120.

As illustrated in FIG. 13A, the mark member 2400 includes a top portion 2401 which indicates a mark including a character, a numeral, a symbol, or a character string combining these. Moreover, as illustrated in FIG. 13B, the mark member 2400 includes a fitting protrusion 2403 which protrudes downward from the top portion 2401 and engages with the opening H1 of the second operation button 2120. While the top portion 2401 in the example illustrated in FIG. 13A has a circular shape, the top portion 2401 may have a rectangular shape such as a square shape or other shapes. According to the example illustrated in FIG. 13A, a symbol of a "circle" is given to the top portion 2401 as identification information. The identification information is not limited to a symbol, and may be a numeral (Arabic numeral or Roman numeral) or other types of characters. The identification information given to the top portion 2401 of the mark member 2400 may be of a type different from the type indicated by the identification information display portions 2111 provided on the first operation button 2110. Moreover, the identification information given to the top portion 2401 may be formed in Braille or by embossing to allow the user to touch and identify information.

The mark member 2400 is attachable to the inside of the opening H1 of the second operation button 2120, and detachable from the opening H1. The fitting protrusion 2403 of the mark member 2400 includes a first extension portion 2403a and a second extension portion 2403b having the same length and each extending downward and forming a flanged lower end. A clearance is formed in the width direction of the mark member 2400 between the first extension portion 2403a and the second extension portion 2403b. The entire width of the fitting protrusion 2403 decreases when the first extension portion 2403a and the second extension portion 2403b bend toward the clearance. This configuration enables the user to insert the fitting protrusion 2403 into the inside of the opening H1 formed in the upper surface portion of the second operation button 2120, or remove the fitting protrusion 2403 from the opening H1.

FIG. 14 is a perspective view illustrating the A type second operation button 2120A to which the mark member 2400 is attached. FIG. 15 is a perspective view illustrating the E type second operation button 2120E to which the mark member 2400 is attached. As illustrated in FIG. 2, the opening H1 is formed at a position closer to the edge of the upper surface portion of each of the second operation buttons 2120 than the central portion of the upper surface portion of the corresponding second operation button 2120. Accordingly, as illustrated in FIGS. 14 and 15, the mark member 2400 can be detachably attached to a position closer to the edge of the upper surface portion of the second operation button 2120 than the central portion of this upper surface portion. This configuration facilitates pushing-down at the central portion of the upper surface portion of the second operation button 2120.

The second operation button 2120 includes the outer circumferential portion 2121 disposed out of the outer circumferential edge C1 of the main body 2100 and extended outward. As illustrated in FIGS. 14 and 15, at least a part of the top portion 2401 of the mark member 2400 overlaps with a part of the outer circumferential portion 2121 of the second operation button 2120. While operating the second operation button 2120, the user can recognize his or her touch at a portion near the outer circumferential edge 2121 of the second operation button 2120 and his or her touch at a central portion of the second operation button 2120 in the width direction, for example, by touching the mark member 2400. In this manner, the user can more easily check that the finger or the like is placed at a given home position.

Moreover, as illustrated in FIGS. 14 and 15, the top portion 2401 of the mark member 2400 has a circular shape, and a part of the outer circumferential edge of the top portion 2401 overlaps with a part of the outer circumferential edge 2121 of the second operation button 2120. This configuration enables the user to easily insert the fingertip (a tip of a nail) or the like into a space between the top portion 2401 of the mark member 2400 and the second operation button 2120, and remove the mark member 2400 from the second operation button 2120. The top portion 2401 of the mark member 2400 may have a portion which crosses over the outer circumferential edge 2121 of the second operation button 2120 and reaches the outside of the second operation button 2120. Moreover, the outer edge of the top portion 2401 of the mark member 2400 may have a portion which overlaps with the inner circumferential edge 2122 of the second operation button 2120. This configuration can also facilitate removal of the mark member 2400.

As illustrated in FIGS. 14 and 15, the top portion 2401 of the mark member 2400 includes a lower surface portion 2402 which faces the upper surface portion of the second operation button 2120 in a state where the mark member 2400 is attached to the second operation button 2120. The upper surface portion 2123A of the A type second operation button 2120A illustrated in FIG. 14 is slightly curved in the up-down direction. Moreover, the upper surface portion 2123E of the E type second button 2120E illustrated in FIG. 15 is also slightly curved in the up-down direction. Unlike these portions, the lower surface portion 2402 of the mark member 2400 is flat in the up-down direction. Accordingly, a slight clearance is produced between the upper surface portion of the second operation button 2120 and the lower surface portion 2402 (see FIG. 13B) of the mark member 2400. The user can insert the fingertip or the like into this clearance. This configuration can facilitate removal of the mark member 2400 from the second operation button 2120.

The mark member 2400 illustrated in FIG. 15 is different from the mark member 2400 illustrated in FIG. 14 in that a symbol of a "square" is given to the top portion 2401 instead of the symbol of the "circle" given to the top portion 2401. The user can attach the mark member 2400 given desired identification information to each of the plurality of second operation buttons 2120. The user can attach the mark member 2400 given a mark corresponding to a function set by an application **(e.g.,** a game application) executed by an information processing device, such as a console and a server, to the second operation button 2120. The user can recognize the function of the second operation button 2120 in the application by checking the mark member 2400 attached to the second operation button 2120. Moreover, the user in some situations changes arrangement of the plurality of second operation buttons 2120, or change allocation of the switch of the button receiving portion 2301 corresponding to the function of the application. Even in these situations, a difference produced between the function set by the application and the function indicated by the mark of the mark member 2400 can be inhibited by changing the mark member 2400 attached to the second operation button 2120.

The present invention is not limited to the embodiment described above. For example, modified examples of the above embodiment can also be included in the configurations within the scope of the present invention.

FIG. 16 is an exploded perspective view illustrating a lower side of a second operation button 3200, which is a partial modification of the second operation button 2120 **(e.g.,** the A type second operation button 2120A) described in the embodiment, and a lower side of a mark member 3400, which is a partial modification of the mark member 2400 described in the embodiment. The second operation button 3200 illustrated in FIG. 16 is attachable onto the main body 2100 described in the embodiment. Meanwhile, the mark member 3400 illustrated in FIG. 16 is attachable to the second operation button 3200 illustrated in this figure. As illustrated in FIG. 16, the opening H2 is formed in an outer circumferential edge 3201 of the second operation button 3200. In the example illustrated in FIG. 16, the opening H2 is a hole penetrating the second operation button 3200 in the up-down direction. The mark member 3400 can be detachably attached to the opening H2 of the second operation button 3200.

The mark member 3400 may be manufactured using such a material as resin and rubber. As illustrated in FIG. 16, the mark member 3400 includes a top portion 3401 having a plate shape and a fitting protrusion 3403 which protrudes downward from the top portion 3401 and fits into the opening H2 of the second operation button 3200. Identification information (mark), which is a character, a symbol, a numeral, a character string combining these, or the like, is given to an upper surface of the top portion 3401. The identification information given to the top portion 3401 may be formed in Braille or by embossing to allow the user to touch and identify information. In addition, while the top portion 3401 in the example illustrated in FIG. 16 has a circular (disc) shape, the top portion 3401 may have a rectangular shape such as a square shape or other shapes.

As illustrated in FIG. 16, the top portion 3401 of the mark member 3400 has a flat lower surface portion 3402. The lower surface portion 3402 of the mark member 3400 faces the upper surface portion of the second operation button 3200 in a state where the mark member 3400 is attached to the second operation button 3200. While the lower surface portion 3402 of the mark member 3400 is flat, the upper surface portion of the second operation button 3200 may be curved. This configuration can form a slight clearance between the upper surface portion of the second operation button 3200 and the lower surface portion 3402 of the mark member 3400. The user can remove the mark member 3400 from the second operation button 3200 by inserting the fingertip or the like into this clearance.

As illustrated in FIG. 16, a fitting protrusion 3403 of the mark member 3400 extends downward (upward with respect to the sheet surface of FIG. 16) from the lower surface portion 3402 of the mark member 3400. The fitting protrusion 3403 may have a cylindrical shape. The fitting protrusion 3403 includes a first protrusion 3403a and a second protrusion 3403b each protruding along the lower surface portion 3402 from the outer circumferential surface of the fitting protrusion 3403. The first protrusion 3403a protrudes in a first direction crossing the up-down direction, while the second protrusion 3403b protrudes in a second direction opposite to the first direction. The first protrusion 3403a and the second protrusion 3403b are located in opposite directions with respect to an axial line Ax2, which is an axial line of the fitting protrusion 3403, extends in the up-down direction, and is sandwiched between the first protrusion 3403a and the second protrusion 3403b. A width V of the first protrusion 3403a in the circumferential direction of the fitting protrusion 3403 and a width V of the second protrusion 3403b in the same direction may be equal to each other. The first protrusion 3403a and the second protrusion 3403b may have the same shape and size. Note that either three or more protrusions or one protrusion may be formed on the fitting protrusion 3403.

As illustrated in FIG. 16, the opening H2 has a circular shape, and a plurality of recesses 3203a to 3203h are formed in an outer circumferential edge below the opening H2. Each of the plurality of recesses 3203a to 3203h is recessed in a direction crossing the up-down direction. Each of the recesses 3203a to 3203h is recessed to the outside of the edge of the opening H2. In the example illustrated in FIG. 16, the eight recesses are provided. Alternatively, the number of the recesses formed in the edge of the opening H2 may be more than eight or smaller than eight. For example, the number of the recesses formed in the edge of the opening H2 may be four.

As illustrated in FIG. 16, each of the plurality of recesses 3203a to 3203h formed in the outer circumferential edge of the opening H2 may have a width W in a direction along the edge of the opening H2. The respective widths W of the plurality of recesses 3203a to 3203h may be equalized. The plurality of recesses 3203a to 3203h may have the same and size. In the example illustrated in FIG. 16, the eight recesses are provided, and an angle formed by the two adjoining recesses and the center of the opening H2 has 45 degrees. In a case where the four recesses are formed in the outer circumferential edge of the opening H2, the angle formed by the two adjoining recesses and the center of the opening H2 may have 90 degrees.

The size of the plurality of recesses 3203a to 3203h corresponds to the size of the first protrusion 3403a and the second protrusion 3403b. More specifically, the width W of the plurality of recesses 3203a to 3203h is slightly larger than the width V of the first protrusion 3403a and the second protrusion 3403b. This configuration enables each of the first protrusion 3403a and the second protrusion 3403b of the fitting protrusion 3403 to engage with any one of the plurality of recesses 3203a to 3203h.

Moreover, for example, a plurality of recesses may be formed in the outer circumferential edge of the fitting protrusion 3403. In this case, at least one protrusion which protrudes to the center of the opening H2 and fits into any one of the plurality of recesses of the fitting protrusion 3403 may be formed in the outer circumferential edge of the opening H2.

When the first and second protrusions 3403a and 3403b fit into any one of the plurality of recesses 3201a to 3201h, rotation of the mark member 3400 in the circumferential direction of the axial line Ax2 can be suppressed. Moreover, the mark member 3400 can be attached to the second operation button 3200 such that the first protrusion 3403a and the second protrusion 3403b of the mark member 3400 face in any one of a plurality of directions (directions from the center of the opening H2 to the plurality of recesses 3203a to 3203h). This configuration enables the identification information given to the top portion 3401 of the mark member 3400, such as a character and a symbol, to face in a plurality of directions with respect to the second operation button 3200. For example, a bottom of the identification information such as a character can face, with respect to the second operation button 3200, the front or the rear, in the left direction or the right direction, or in a diagonal direction to the front-rear direction and the left-right direction.

As illustrated in FIG. 3, the plurality of button receiving portions 2301 formed on the main body 2100 are arranged along the outer circumferential edge of the dome-shaped first operation button 2110. Accordingly, the plurality of second operation buttons 3200 attached to the plurality of button receiving portions 2301 face in different directions. For example, in a case where the second operation button 3200 is attached to the button receiving portion 2301 located on the front side of the main body 2100, the outer circumferential edge 3201 of the second operation button 3200 faces the front. Meanwhile, in a case where the second operation button 3200 is attached to the button receiving portion 2301 located on the rear side of the main body 2100, the outer circumferential edge 3201 of the second operation button 3200 faces the rear. In the example illustrated in FIG. 3, the main body 2100 has the eight button receiving portions 2301. Accordingly, in a case where the eight second operation buttons 3200 are attached to the eight button receiving portions 2301, the respective outer circumferential edges 3201 of the second operation buttons 3200 face in eight directions, i.e., the front, the rear, the left direction, the right direction, the left front direction, the left rear direction, the right front direction, and the right rear direction.

The number of the directions in which the outer circumferential edges 3201 of the plurality of second operation buttons 3200 attached to the main body 2100 face and the number of the directions from the center of the opening H2 formed in each of the second operation buttons 3200 toward the plurality of recesses 3203a to 3203h may be equalized. This configuration enables the identification information given to the plurality of mark members 3400 attached to the plurality of second operation buttons 3200 to face in the same direction. Moreover, the directions in which the outer circumferential edges 3201 of the plurality of second operation buttons 3200 face, and the directions from the center of the opening H2 toward the plurality of recesses 3203a to 3203h may be equalized.

For attaching the plurality of mark members 3400 to the plurality of second operation buttons 3200 attached to the main body 2100, the user may attach the mark members 3400 such that the plurality of items of the identification information face in the same direction. For example, the plurality of mark members 3400 may be attached such that bottoms of the plurality of items of the identification information face the front of the user. This configuration enables the user to easily recognize the plurality of items of the identification information. Specifically, the user can easily recognize functions of the second operation buttons 2120 set by an application (e.g., a game application) executed by an information processing device such as a console and a server.

(1-1)
As described above, the input device described in the present embodiment includes a main body, a first operation button that includes an upper surface portion on which a hand is placed and that is attached to the main body, and a plurality of second operation buttons arranged along an outer edge of the first operation button and attached to the main body. Each of the plurality of second operation buttons includes an outer circumferential portion that crosses over an outer circumferential edge of the main body and extends outward. This configuration improves operational comfortability of the input device for users not satisfied with operational comfortability of conventional input devices.

(1-2)
The input device described in the present embodiment includes a main body, a first operation button attached to the main body to constitute a portion where a hand is placed, and a plurality of second operation buttons arranged along an outer edge of the first operation button and attached to the main body. Each of upper surface portions of the plurality of second operation buttons are disposed above an extension line extending along an upper surface portion of the first operation button. This configuration improves operational comfortability of the input device for users not satisfied with operational comfortability of conventional input devices.

(1-3)
In the input device of (1-1) or (1-2) described above, the plurality of second operation buttons may be detachably attached to the main body. For example, the user can select the desired second operation button from the plurality of types of second operation buttons, and attach the selected second operation button to the main body. Moreover, an outer circumferential portion of each of the second operation buttons crosses over an outer edge of the main body and extends to the outside of the main body. Accordingly, the user can fit a fingertip, the back of the hand, or the like with the outer circumferential portion to remove the second operation buttons.

(1-4)
In the input device of (1-3) described above, the main body may include an engaging portion engaging with each of the plurality of second operation buttons. The engaging portion may be disposed between the first operation button and the second operation buttons and come into contact with the second operation buttons in a state where the second operation buttons are attached to the main body. The engaging portion is movable between a lock position where the engaging portion engages with the second operation buttons and an unlock position located closer to the first operation button than the lock position. The user can easily remove the second operation buttons from the main body by raising upward the outer circumferential edges of the second operation buttons.

(1-5)
In the input device of (1-4) described above, the main body may include a shaft member rotatable around a center aligned with an axial line that crosses an up-down direction and a direction toward a central portion of the main body. The engaging portion may be provided on the shaft member.

(1-6)
In the input device of (1-4) or (1-5) described above, each of the plurality of second operation buttons may include a slope that extends downward from the outer circumferential portion of the corresponding second operation button and toward the central portion of the main body. When the user pushes the slope of any one of the second operation buttons, the corresponding second operation button moves toward the central portion of the main body. As a result, the engaging portion is pushed by the second operation button and moves to the unlock position. In this manner, the second operation button can be removed from a button receiving portion.

(2-1)
The input device described in the present embodiment includes a main body that includes a switch and a button receiving portion for pushing the switch, an operation button attached to the button receiving portion by magnetic force, a first magnetic structure that is provided on one of the button receiving portion and the operation button and includes at least two magnetic poles disposed away from each other in a first direction, and a second magnetic structure that is provided on the other of the button receiving portion and the operation button and includes a magnetic body or a magnet facing the at least two magnetic poles. The operation button includes a first engaging portion that is located in a second direction crossing the first direction with respect to the at least two magnetic poles and engages with the button receiving portion. This configuration can attract a second operation button to the button receiving portion by magnetic force, and correct a posture of the second operation button. Accordingly, work for attaching the second operation button to the button receiving portion is easily carried out. Moreover, separation of the second operation button from the main body can be prevented at the time of pushing-down of the second operation button on the side opposite to the side where the engaging portion is provided.

(2-2)
In the input device of (2-1) described above, the operation button may be allowed to be pushed down in a third direction crossing the first direction and the second direction.

(2-3)
In the input device of (2-2) described above, the first magnetic structure may include a magnet. The third direction may be a direction in which the magnetic poles of the magnet included in the first magnetic structure are away from each other.

(2-4)
In the input device of any one of (2-1) to (2-3) described above, the operation button may cross over an outer circumferential edge of the button receiving portion in a direction opposite to a direction in which the first engaging portion is located with respect to the at least two magnetic poles. Even in a case where the user pushes down the second operation button at a portion crossing over the outer circumferential edge of the button receiving portion, separation of the second operation button from the button receiving portion can be prevented by engagement between the engaging portion and the button receiving portion on the side opposite to the pushed portion.

(2-5)
In the input device of (2-1) or (2-4) described above, the operation button may include a first portion corresponding to the side where the first engaging portion is provided with respect to the at least two magnetic poles and a second portion that is a portion corresponding to the side opposite to the first portion with respect to the at least two magnetic poles. The second portion may have a larger width in the second direction than a width of the first portion. The second operation button engages with the button receiving portion at the first portion where the engaging portion is provided. Accordingly, separation of the first portion from the button receiving portion and separation of the second operation button from the button receiving portion can be prevented when the user pushes down the second portion.

(2-6)
The first magnetic structure of any one of (2-1) to (2-5) described above may further include at least one U-shaped magnetic body. The at least one magnet may be disposed in a recess of the at least one U-shaped magnetic body. This configuration can increase attraction force of the magnet for attracting the magnetic body. Moreover, this configuration can reduce the number of the magnets disposed on the button receiving portion.

(2-7) In the input device of any one of (2-1) to (2-6) described above, the operation button may include a fitting protrusion that includes the first magnetic structure or the second magnetic structure. The button receiving portion may include a fitting recess that receives the fitting protrusion. A guided slope may be formed on an outer circumferential surface of the fitting protrusion. This configuration can guide the fitting protrusion of the second operation button to the fitting recess of the button receiving portion, thereby facilitating attachment of the second operation button to the button receiving portion.

(2-8) In the input device of any one of (2-1) to (2-7) described above, the fitting protrusion of the operation button may include a first fitting portion that is a protrusion protruding toward the button receiving portion or that is a recess recessed in a direction away from the button receiving portion. The button receiving portion may include a second fitting portion that is a protrusion fitting into the first fitting portion and protruding toward the operation button or that is a recess recessed in a direction away from the operation button. An outer circumferential surface of the first fitting portion may include a perpendicular surface or a surface more perpendicular than the guided slope. This configuration can suppress movement of the second operation button along a bottom surface of the button receiving portion when the second operation button is attached.

(2-9) In the input device of any one of (2-1) to (2-8) described above, the main body may include a cover member that has an opening through which the button receiving portion is exposed upward. A central portion of the button receiving portion may be urged upward by the switch. An outer edge of the button receiving portion may come into contact with the cover member. This configuration enables the switch to be operated by both of pushes applied to an end of one side of the button receiving portion and an end of the other side of the button receiving portion.

(2-10) The operation button described in the present embodiment is an operation button attached to a main body by magnetic force, and includes a first magnetic structure that includes at least two magnetic poles away from each other in a first direction or a second magnetic structure that includes a magnetic body or a magnet facing the at least two magnetic poles, and a first engaging portion that is located in a second direction crossing the first direction with respect to the at least two magnetic poles and engages with the main body. This configuration attracts a second operation button to the main body by magnetic force, thereby facilitating work for attaching the second operation button to the main body.

(3-1) The input device described in the present embodiment includes a main body, a first operation button attached to the main body, and a second operation button attached to the main body at a position different from a position at which the first operation button is attached. The first operation button includes a first upper surface portion that constitutes an operation portion operated by a user. The second operation button includes a second upper surface portion constituting an operation portion operated by the user, and includes an extended portion that is provided at a part of the second upper surface portion and that covers a part of the first upper surface portion. This configuration enables users not satisfied with operational comfortability of conventional input devices to operate the input device in a comfortable manner.

(3-2) In the input device of (3-1) described above, the second operation button may be a push button. A clearance larger than a push distance of the second operation button may be formed between a lower surface of the extended portion and the first upper surface portion. This configuration can suppress interference between the second operation button and the first operation button caused when the second operation button is pushed down.

(3-3) In the input device of (3-1) or (3-2) described above, a plurality of buttons may be arranged along an outer edge of the first operation button, and attached to the main body. One of the plurality of buttons may be the second operation button. This configuration can sufficiently produce an exposed area inside the plurality of second operation buttons on the upper surface of the first operation button.

(3-4)
In the input device of any one of (3-1) to (3-3) described above, the main body may include a button receiving portion to which the second button is attached. The second operation button may include an outer circumferential portion that crosses over an outer circumferential edge of the main body and extends outward. The extended portion may have a smaller width than that of the outer circumferential portion. This configuration facilitates layout of the operation buttons of the main body.

(3-5)
In the input device of (3-3) described above, the plurality of buttons may be detachably attached to the main body. The user can change arrangement of the plurality of buttons that are provided on the main body and that include the second operation button.

(3-6) In the input device of any one of (3-1) to (3-5) described above, the main body may include a switch and a button receiving portion for pushing the switch. The second operation button may include a first engaging portion that engages with the button receiving portion. The first engaging portion may be provided on the second operation button at a position on the side opposite to the extended portion. This configuration can prevent separation of a portion of the second operation button on the side opposite to the extended portion from the button receiving portion when the user pushes down the extended portion of the second operation button.

(3-7) In the input device of (3-6) described above, the second operation button may include an outer circumferential portion that crosses over an outer circumferential edge of the main body and extends outward. The second operation button may include a second engaging portion that is provided on the second operation button at a position near the extended portion and engages with the button receiving portion. This configuration can prevent separation of the second operation button at a portion near the extended portion from the button receiving portion when the user pushes down the second operation button at a portion near the outer circumferential portion.

(3-8) In the input device of (3-6) or (3-7) described above, the second operation button may include a movable portion that is provided on the outer circumferential portion to release engagement of the first engaging portion. The user can release the engagement between the engaging portion and the button receiving portion and remove the second operation button by moving the movable portion.

(3-9) In the input device of any one of (3-1) to (3-8) described above, the first operation button may be provided at a central portion of the main body. The extended portion may be extended toward the central portion of the main body. The second operation button may include an outer circumferential portion that crosses over an outer circumferential edge of the main body and extends outward. This configuration can increase the size of the second operation button in a planar view, and enables the user to easily push the second operation button.

(3-10) The second operation button described in the present embodiment is an operation button that is attached to a main body and that includes an upper surface portion pushed by a hand, and includes an extended portion that is provided at a part of the upper surface portion and covers a part of an upper surface portion that is attached to the main body and provided on a different operation button to constitute a portion on which the hand is placed. This configuration enables users not satisfied with operational comfortability of conventional input devices to operate the input device in a comfortable manner.

(4-1) The input device described in the present embodiment includes a main body, a plurality of operation buttons that are attached to the main body and that each include an upper surface portion allowed to be pushed downward, and mark members each of which includes a top portion indicating a mark on the basis of which the user recognizes a function allocated to the corresponding operation button of the plurality of operation buttons and which are detachably attached to the plurality of operation buttons. Each of the plurality of operation buttons includes an opening formed in the upper surface portion. Each of the mark members includes a fitting protrusion that protrudes downward from the top portion and fits into the opening. This configuration enables the user to recognize the function allocated to a second operation button, by checking the mark indicated by the mark member. Moreover, even in a case where the function of the second operation button is changed under an application, the user can change the mark member of the second operation button to recognize the correct function allocated to the second operation button.

(4-2) The input device described in the present embodiment includes a main body, a plurality of operation buttons that are attached to the main body and that each include an upper surface portion allowed to be pushed downward, and mark members each of which includes a top portion indicating a mark on the basis of which the user recognizes a function allocated to the corresponding operation button of the plurality of operation buttons and which are detachably attached to the plurality of operation buttons. Each of the mark members is detachably attached to a position closer to an edge of the upper surface portion than a central portion of the upper surface portion. This configuration enables the user to recognize the function allocated to a second operation button, by checking the mark indicated on the mark member. Moreover, the mark member is attached to the position closer to the edge of the upper surface portion of the second operation button than the central portion of the upper surface portion. Accordingly, the user can easily push down the central portion of the upper surface portion of the second operation button.

(4-3) In the input device of (4-1) or (4-2) described above, the plurality of operation buttons may be detachably attached to the main body. Even in a case where the user changes the arrangement of the second operation button on the main body, the user can change the mark member of the second operation button to recognize the correct function allocated to the second operation button.

(4-4) In the input device of any one of (4-1) to (4-3) described above, a part of outer circumferential edges of the top portions may overlap with a part of outer circumferential edges of the operation buttons. This configuration enables the user to easily insert a fingertip or the like into a space between the top portion of the mark member and the second operation button, and remove the mark member from the second operation button.

(4-5) In the input device of any one of (4-1) to (4-4) described above, each of the top portions may include a lower surface portion that faces the upper surface portion in a state where the mark member is attached to the operation button. Each of the upper surface portions may be curved in an up-down direction. Each of the lower surface portions may be flat in the up-down direction. This configuration can form a clearance between the top portion of the mark member and the second operation button, and facilitate removal of the mark member from the second operation button.

(4-6) In the input device of any one of (4-1) to (4-5) described above, each of the plurality of operation buttons may include an outer circumferential portion that crosses over an outer circumferential edge of the main body and extends outward. At least a part of the top portions may overlap with a part of the outer circumferential portions. This configuration enables the user to recognize a touch at a portion near the outer circumferential portion of the second operation button by touching the mark member while the user is performing the second operation.

(4-7) In the input device of any one of (4-1) to (4-6) described above, each of the mark members may include a fitting protrusion that protrudes downward from the top portion and fits into the opening. Each of the openings may include a plurality of recesses formed along an edge of the opening. Each of the fitting protrusions may include at least one protrusion that fits into any one of the plurality of recesses. This configuration can suppress rotation of the mark member in a circumferential direction of an axial line of the fitting protrusion. Moreover, this configuration enables the mark given to the top portion of the mark member to face in a plurality of directions with respect to the second operation button. For example, the user can easily recognize a plurality of marks by attaching a plurality of the mark members to a plurality of the second operation buttons such that bottoms of the respective marks of the plurality of mark members face the front of the user.

(4-8) In the input device of any one of (4-1) to (4-6) described above, each of the mark member may include a fitting protrusion that protrudes downward from the top portion and fits into the opening. Each of the fitting protrusions may include a plurality of recesses. Each of the openings may include at least one protrusion that is formed along an edge of the opening and fits into at least any one of the plurality of recesses. This configuration can also suppress rotation of the mark member in a circumferential direction of an axial line of the fitting protrusion. Moreover, this configuration enables the mark given to the top portion of the mark member to face in a plurality of directions with respect to the second operation button. For example, the user can easily recognize a plurality of marks by attaching a plurality of the mark members to a plurality of the second operation buttons such that bottoms of the respective marks of the plurality of mark members face the front of the user.

It will be understood that the subject matters covered by the present invention are not limited to the specific embodiment presented and described in detail in the present description and are defined only by the claims.

## Claims

1. An input device comprising:
a main body;
a first operation button attached to the main body; and
a second operation button attached to the main body at a position different from a position at which the first operation button is attached,
wherein the first operation button includes a first upper surface portion that constitutes an operation portion operated by a user, and
the second operation button includes a second upper surface portion constituting an operation portion operated by the user, and includes an extended portion that is provided at a part of the second upper surface portion and that covers a part of the first upper surface portion.

2. The input device according to claim 1,
wherein the second operation button is a push button; and
a clearance larger than a push distance of the second operation button is formed between a lower surface of the extended portion and the first upper surface portion.

3. The input device according to claim 1,
wherein a plurality of buttons are arranged along an outer edge of the first operation button, and attached to the main body, and
one of the plurality of buttons is the second operation button.

4. The input device according to claim 1,
wherein the main body includes a button receiving portion to which the second button is attached,
the second operation button includes an outer circumferential portion that crosses over an outer circumferential edge of the main body and extends outward, and
the extended portion has a smaller width than that of the outer circumferential portion.

5. The input device according to claim 3,
wherein the plurality of buttons are detachably attached to the main body.

6. The input device according to claim 1,
wherein the main body includes a switch and a button receiving portion for pushing the switch,
the second operation button includes a first engaging portion that engages with the button receiving portion, and
the first engaging portion is provided on the second operation button at a position on a side opposite to the extended portion.

7. The input device according to claim 6,
wherein the second operation button includes an outer circumferential portion that crosses over an outer circumferential edge of the main body and extends outward, and
the second operation button includes a second engaging portion that is provided on the second operation button at a position near the extended portion and engages with the button receiving portion.

8. The input device according to claim 6,
wherein the second operation button includes a movable portion that is provided on the outer circumferential portion to release engagement of the first engaging portion.

9. The input device according to claim 1,
wherein the first operation button is provided at a central portion of the main body,
the extended portion is extended toward the central portion of the main body, and
the second operation button includes an outer circumferential portion that crosses over an outer circumferential edge of the main body and extends outward.

10. An operation button that is attached to a main body and includes an upper surface portion pushed by a hand, the operation button comprising:
an extended portion that is provided at a part of the upper surface portion and covers a part of an upper surface portion that is attached to the main body and provided on a different operation button to constitute a portion on which the hand is placed.
